(19) Europäisches Patentamt
European Patent Office
Office européen des brevets

(11) **EP 3 595 796 B1**

(12) **EUROPÄISCHE PATENTSCHRIFT**

(45) Veröffentlichungstag und Bekanntmachung des Hinweises auf die Patenterteilung:
**10.08.2022   Patentblatt 2022/32**

(21) Anmeldenummer: **19724143.3**

(22) Anmeldetag: **08.05.2019**

(51) Internationale Patentklassifikation (IPC):
**B01D 46/24** *(2006.01)*   **B01D 46/00** *(2022.01)*
**B01D 53/92** *(2006.01)*   **B01D 53/94** *(2006.01)*

(52) Gemeinsame Patentklassifikation (CPC):
**B01D 46/00;** B01D 46/2429; B01D 53/92;
B01D 53/94; B01D 2279/30

(86) Internationale Anmeldenummer:
**PCT/EP2019/061786**

(87) Internationale Veröffentlichungsnummer:
**WO 2019/215208 (14.11.2019 Gazette 2019/46)**

(54) **VERFAHREN ZUM BESCHICHTEN EINES WANDFLUSSFILTERS**

METHOD FOR COATING A WALL-FLOW FILTER

PROCÉDÉ DESTINÉ À RECOUVRIR UN FILTRE À ÉCOULEMENT DE PAROI

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **09.05.2018   DE 102018111246**

(43) Veröffentlichungstag der Anmeldung:
**22.01.2020   Patentblatt 2020/04**

(60) Teilanmeldung:
**22161315.1**

(73) Patentinhaber: **UMICORE AG & CO. KG
63457 Hanau-Wolfgang (DE)**

(72) Erfinder:
• **FOERSTER, Martin
  63654 Büdingen (DE)**
• **OLTERSDORF, Antje
  79102 Freiburg (DE)**
• **DEIBEL, Naina
  64319 Pfungstadt (DE)**
• **ZOELLE, Sascha
  79585 Steinen (DE)**
• **KOCH, Jürgen
  63457 Hanau (DE)**
• **GENSCH, Manuel
  63743 Aschaffenburg (DE)**
• **HASSELMAN, Wolfgang
  79619 Rheinfelden (DE)**

(74) Vertreter: **Retzow, Stefan
  Umicore AG & Co. KG
  Patente
  Rodenbacher Chaussee 4
  63457 Hanau-Wolfgang (DE)**

(56) Entgegenhaltungen:
EP-A1- 2 727 640      EP-A2- 2 610 448
DE-C1- 4 225 970      DE-C1- 4 225 970
US-A1- 2011 229 634   US-A1- 2011 229 634
US-A1- 2016 310 935   US-B2- 8 388 721

**Beschreibung**

Die vorliegende Erfindung ist auf ein Verfahren zur Herstellung eines beschichteten Wandflussfilters gerichtet. Der Wandflussfilter wird mit einem Pulver-Gas-Aerosol beschichtet.

Das Abgas von Verbrennungsmotoren in Kraftfahrzeugen enthält typischerweise die Schadgase Kohlenmonoxid (CO) und Kohlenwasserstoffe (HC), Stickoxide ($NO_x$) und gegebenenfalls Schwefeloxide ($SO_x$), sowie Partikel, die weitgehend aus festen kohlenstoffhaltigen Teilchen und gegebenenfalls anhaftenden organischen Agglomeraten bestehen. Diese werden als Primäremissionen bezeichnet. CO, HC und Partikel sind Produkte der unvollständigen Verbrennung des Kraftstoffs im Brennraum des Motors. Stickoxide entstehen im Zylinder aus Stickstoff und Sauerstoff der Ansaugluft, wenn die Verbrennungstemperaturen 1200°C überschreiten. Schwefeloxide resultieren aus der Verbrennung organischer Schwefelverbindungen, die in nicht-synthetischen Kraftstoffen immer in geringen Mengen enthalten sind. Die Einhaltung künftig in Europa, China, Nordamerika und Indien geltender gesetzlicher Abgasgrenzwerte für Kraftfahrzeuge erfordert die weitgehende Entfernung der genannten Schadstoffe aus dem Abgas. Zur Entfernung dieser für Umwelt und Gesundheit schädlichen Emissionen aus den Abgasen von Kraftfahrzeugen sind eine Vielzahl katalytischer Abgasreinigungstechnologien entwickelt worden, deren Grundprinzip üblicherweise darauf beruht, dass das zu reinigende Abgas über einen Durchfluss- (flow-through) oder einen Wandfluss- (wall-flow) -wabenkörper mit einer darauf aufgebrachten katalytisch aktiven Beschichtung geleitet wird. Der Katalysator fördert die chemische Reaktion verschiedener Abgaskomponenten unter Bildung unschädlicher Produkte wie beispielsweise Kohlendioxid, Wasser und Stickstoff.

Die eben beschriebenen Durchfluss- oder Wandflusswabenkörper werden auch als Katalysatorträger, Träger oder Substratmonolithe bezeichnet, tragen sie doch die katalytisch aktive Beschichtung auf ihrer Oberfläche bzw. in den diese Oberfläche bildenden Wänden. Die katalytisch aktive Beschichtung wird häufig in einem sogenannten Beschichtungsvorgang in Form einer Suspension auf den Katalysatorträger aufgebracht. Viele derartige Prozesse sind in der Vergangenheit von Autoabgaskatalysatorherstellern hierzu veröffentlicht worden (EP1064094B1, EP2521618B1, WO10015573A2, EP1136462B1, US6478874B1, US4609563A, WO9947260A1, JP5378659B2, EP2415522A1, JP2014205108A2).

Für die jeweils möglichen Methoden der Schadstoffumwandlung im Katalysator ist die Betriebsart des Verbrennungsmotors entscheidend. Dieselmotoren werden meist mit Luftüberschuss betrieben, die meisten Ottomotoren mit einem stöchiometrischen Gemisch aus Ansaugluft und Kraftstoff. Stöchiometrisch heißt, dass im Mittel genau so viel Luft zur Verbrennung des im Zylinder vorhandenen Kraftstoffs zur Verfügung steht, wie für eine vollständige Verbrennung benötigt wird. Das Verbrennungsluftverhältnis λ (A/F-Verhältnis; Luft/Kraftstoffverhältnis) setzt die tatsächlich für eine Verbrennung zur Verfügung stehende Luftmasse $m_{L,tats}$ ins Verhältnis zur stöchiometrischen Luftmasse $m_{L,st}$:

$$\lambda = \frac{m_{\mathrm{L,tats}}}{m_{\mathrm{L,st}}}$$

Ist λ < 1 (z. B. 0,9) bedeutet dies "Luftmangel", man spricht von einem fetten Abgasgemisch, λ > 1 (z. B. 1,1) bedeutet "Luftüberschuss" und das Abgasgemisch wird als mager bezeichnet. Die Aussage λ = 1,1 bedeutet, dass 10% mehr Luft vorhanden ist, als zur stöchiometrischen Reaktion notwendig wäre.

Sofern im vorliegenden Text von mager verbrennenden Kraftfahrzeugmotoren die Rede ist, so wird hiermit hauptsächlich auf Dieselmotoren und überwiegend im Mittel mager verbrennende Ottomotoren Bezug genommen. Letztere sind überwiegend im Mittel mit magerem A/F-Verhältnis (Luft/Kraftstoff-Verhältnis) betriebene Benzinmotoren. Dagegen werden die meisten Benzinmotoren mit im Mittel stöchiometrischen Verbrennungsgemisch betrieben. Der Ausdruck "im Mittel" nimmt dabei Rücksicht auf die Tatsache, dass moderne Benzinmotoren nicht statisch bei einem festen Luft/Kraftstoffverhältnis (A/F-Verhältnis; λ-Wert) betrieben werden. Vielmehr wird durch die Motorsteuerung ein Gemisch mit einem diskontinuierlichen Verlauf der Luftzahl λ um λ = 1,0 vorgegeben, wodurch sich ein periodischer Wechsel von oxidierenden und reduzierenden Abgasbedingungen ergibt. Dieser Wechsel der Luftzahl λ ist wesentlich für das Abgasreinigungsergebnis. Hierzu wird der λ-Wert des Abgases mit sehr kurzer Zyklenzeit (ca. 0,5 bis 5 Hertz) und einer Amplitude Δλ von 0,005 ≤ Δλ ≤ 0,07 um den Wert λ = 1.0 geregelt. Im Durchschnitt ist in solchen Betriebszuständen daher das Abgas als "im Mittel" stöchiometrisch zu bezeichnen. Damit sich diese Abweichungen nicht nachteilig auf das Abgasreinigungsergebnis bei Überleiten des Abgases über den Dreiwegkatalysator auswirken, gleichen die im Dreiwegkatalysator enthaltenen Sauerstoffspeichermaterialien diese Abweichungen aus, indem sie Sauerstoff nach Bedarf aus dem Abgas aufnehmen oder ins Abgas abgeben (R. Heck et al., Catalytic Air Pollution Control - Commercial Technology, Wiley, 2. Auflage 2002, Seite 87). Aufgrund der dynamischen Betriebsweise des Motors im Fahrzeug treten zeitweise jedoch weitere Abweichungen von diesem Zustand auf. Zum Beispiel bei starken Beschleunigungen oder im Schubbetrieb können Betriebszustände des Motors und damit des Abgases eingestellt werden, die im Mittel über- oder unterstöchiometrisch sein können. Mager verbrennende Ottomotoren weisen dagegen ein Abgas auf, welches überwiegend, d.h. in der überwiegenden Zeit des Verbrennungsbetriebs ein im Mittel mageres Luft/Kraftstoffverhältnis verbrennt.

Die Schadgase Kohlenmonoxid und Kohlenwasserstoffe können aus einem mageren Abgas durch Oxidation an einem geeigneten Oxidationskatalysator unschädlich gemacht werden. Bei einem stöchiometrisch betriebenen Verbrennungsmotor können alle drei Schadgase (HC, CO und NOx) über einen Dreiwegkatalysator beseitigt werden.

Die Reduktion der Stickoxide zu Stickstoff ("Entstickung" des Abgases) ist wegen des hohen Sauerstoffgehaltes eines mager verbrennenden Motors schwieriger. Ein bekanntes Verfahren ist hier die selektive katalytische Reduktion der Stickoxide (Selective Catalytic Reduction; SCR) an einem geeigneten Katalysator, kurz SCR-Katalysator genannt. Dieses Verfahren gilt gegenwärtig für die Entstickung von Magermotorenabgasen als bevorzugt. Die Verminderung der im Abgas enthaltenden Stickoxide erfolgt im SCR-Verfahren unter Zuhilfenahme eines aus einer externen Quelle in den Abgasstrang eindosierten Reduktionsmittels. Als Reduktionsmittel wird Ammoniak eingesetzt, welches die im Abgas vorhandenen Stickoxide am SCR-Katalysator zu Stickstoff und Wasser umsetzt. Das als Reduktionsmittel verwendete Ammoniak kann durch Eindosieren einer Ammoniakvorläuferverbindung, wie beispielsweise Harnstoff, Ammoniumcarbamat oder Ammoniumformiat, in den Abgasstrang und anschließende Hydrolyse verfügbar gemacht werden.

Zur Entfernung der Partikelemissionen sind Dieselpartikelfilter (DPF) bzw. Benzinpartikelfilter (GPF) mit und ohne zusätzliche katalytisch aktive Beschichtung geeignete Aggregate. Zur Erfüllung der gesetzlichen Normen ist es für die aktuellen und zukünftigen Applikationen zur Abgasnachbehandlung von Verbrennungsmotoren aus Kostengründen aber auch aus Bauraumgründen wünschenswert, Partikelfilter mit anderen katalytisch aktiven Funktionalitäten zu kombinieren. Der Einsatz eines Partikelfilters - ob katalytisch beschichtet oder nicht - führt zu einer im Vergleich zu einem Durchflussträger gleicher Abmessungen merklichen Erhöhung des Abgasgegendrucks und damit zu einer Verringerung des Drehmoments des Motors oder möglicherweise vermehrtem Kraftstoffverbrauch. Um den Abgasgegendruck nicht noch weiter zu erhöhen, werden die Mengen an oxidischen Trägermaterialien für die katalytisch aktiven Edelmetalle des Katalysators bzw. oxidischen Katalysatormaterialien bei einem Filter in der Regel in geringeren Mengen aufgebracht als bei einem Durchflussträger. Dadurch ist die katalytische Wirksamkeit eines katalytisch beschichteten Partikelfilters einem gleich groß dimensionierten Durchflussmonolithen häufig unterlegen.

Es hat schon einige Anstrengungen gegeben, Partikelfilter bereitzustellen, die eine gute katalytische Aktivität durch eine aktive Beschichtung aufweisen und dennoch möglichst geringen Abgasgegendruck aufweisen. Zum einen hat es sich als günstig erwiesen, wenn die katalytisch aktive Beschichtung nicht als Schicht auf der Wand eines porösen Wandflussfilters befindlich ist, sondern die Wand des Filters mit dem katalytisch aktiven Material zu durchsetzen (WO2005016497A1, JPH01-151706, EP1789190B1). Hierfür wird die Partikelgröße der katalytischen Beschichtung so gewählt, dass die Partikel in die Poren der Wandflussfilter eindringen und dort durch Kalzinieren fixiert werden können.

Eine weitere Funktionalität des Filters, die durch eine Beschichtung verbessert werden kann, ist seine Filtrationseffizienz, also die Filterwirkung selbst. In der WO2011151711A1 wird eine Methode beschrieben, mit der ein nicht beschichteter oder katalytisch beschichteter Filter mit einem trockenen Aerosol beaufschlagt wird. Das Aerosol wird durch die Verteilung eines pulverförmigen hochschmelzenden Metalloxids mit einer Partikelgröße von 0,2 $\mu$m bis 5 $\mu$m bereitgestellt und mittels eines Gasstroms über die Einlassseite eines Wandflussfilters geführt. Hierbei agglomerieren die einzelnen Partikel zu einem verbrückten Netzwerk an Partikeln und werden als Schicht auf der Oberfläche der einzelnen den Wandflussfilter durchziehenden Einlasskanäle abgeschieden. Die typische Beladung eines Filters mit dem Pulver beträgt zwischen 5 g und 50 g pro Liter Filtervolumen. Es wird ausdrücklich darauf hingewiesen, dass es nicht erwünscht ist, mit dem Metalloxid eine Beschichtung in den Poren des Wandflussfilters zu erreichen.

Eine weitere Methode zur Erhöhung der Filtrationseffizienz von katalytisch nicht aktiven Filtern wird in der WO2012030534A1 beschrieben. Hierbei wird auf den Wänden der Strömungskanäle der Einlassseite eine Filtrationsschicht ("discriminating layer") durch Ablagerung von keramischen Partikel über ein Partikelaerosol erzeugt. Die Schichten bestehen aus Oxiden von Zirkon, Aluminium oder Silicium, bevorzugt in Faserform von 1 nm bis 5 $\mu$m und haben eine Schichtdicke von mehr als 10 $\mu$m, in der Regel 25 $\mu$m bis 75 $\mu$m. Nach dem Beschichtungsprozess werden die aufgetragenen Pulverpartikel in einem Wärmeprozess kalziniert.

Eine Beschichtung innerhalb der Poren eines Wandflussfilteraggregats mittels Verdüsung von trockenen Partikeln wird in der US8388721B2 beschrieben. Hier soll allerdings das Pulver tief in die Poren eindringen. 20 % bis 60 % der Oberfläche der Wand soll für Rußpartikel zugänglich, demnach offenbleiben. Abhängig von der Strömungsgeschwindigkeit des Pulver-Gas-Gemisches kann ein mehr oder minder starker Pulvergradient zwischen Einlass- und Auslassseite eingestellt werden.

Ebenfalls wird die Einbringung des Pulvers in die Poren, z. B. mithilfe eines Aerosolgenerators, in der EP2727640A1 beschrieben. Hier wird ein nicht katalytisch beschichteter Wandflussfilter mit einem z. B. Aluminiumoxidpartikel enthaltenden Gasstroms dergestalt beschichtet, dass die kompletten Partikel, die eine Partikelgröße von 0,1 $\mu$m bis 5 $\mu$m aufweisen, als poröse Füllung in den Poren des Wandflussfilters abgeschieden werden. Die Partikel selber können eine weitere Funktionalität des Filters zusätzlich zu der Filterwirkung realisieren. Beispielhaft werden diese Partikel in einer Menge von mehr als 80 g/l bezogen auf das Filtervolumen in den Poren des Filters abgeschieden. Sie füllen dabei 10 % bis 50 % des Volumens der gefüllten Poren in den Kanalwänden aus. Dieser Filter weist sowohl mit Ruß beladen wie auch ohne Ruß eine gegenüber dem unbehandelten Filter verbesserte Filtrationseffizienz bei einem geringeren Abgasgegendruck des mit Ruß beladenen Filters auf. Trotzdem besteht weiterhin Bedarf an Partikelfiltern, bei denen die Filtrationseffizienz im Hinblick auf den Abgasgegendruck optimiert ist.

Die DE4225970C1 beschreibt ein Verfahren zur Pulverbeschichtung von Katalysatorträgern. Diese sind Durchflusswabenkörper und werden vorzugsweise vor der Beaufschlagung mit dem Pulver-Gas-Aerosol mit speziellen wässrigen Lösungen angefeuchtet.

In der EP2502661A1 und EP2502662B1 werden weitere Verfahren zur Aufwandbeschichtung von Filtern durch Pulverapplikation erwähnt. Dort werden auch entsprechende Apparaturen zur Beaufschlagung des Filters mit einem Pulver-Gas-Aerosol gezeigt, bei dem der Pulverapplikator und der Wandflussfilter jeweils separiert sind, so dass durch diesen Zwischenraum während des Beschichtens Luft eingesaugt wird. Ein weiteres Verfahren bei dem zur Erhöhung der Filtrationseffizienz von katalytisch nicht aktiven Wandflussfiltern eine Membran ("Trapping layer") auf den Oberflächen der Einlasskanäle von Filtern erzeugt wird, ist in der Patentschrift US8277880B2 sowie in der Anmeldung US20110229634A1 beschrieben. Die Filtrationsmembran auf den Oberflächen der Einlasskanäle wird durch Durchsaugen eines mit Keramikpartikeln (z. B. Siliciumcarbid, Cordierit) beladenen Gasstroms realisiert. Der Wabenkörper wird nach dem Aufbringen der Filterschicht bei Temperaturen von größer 1000°C gebrannt um die Haftfestigkeit der Pulverschicht auf den Kanalwänden zu erhöhen.

Aufgabe der vorliegenden Erfindung ist es, ein entsprechendes Verfahren zur Herstellung von Partikelfilter anzugeben, bei dem der hergestellte Filter eine ausreichende Filtrationseffizienz gekoppelt mit einer möglichst geringen Erhöhung des Abgasgegendrucks aufweist. Das Verfahren sollte einfach und den Verfahren des Standes der Technik im Hinblick auf Arbeitssicherheit, Robustheit und Betriebskosten überlegen sein. Generell ist eine Verbesserung im Hinblick auf ökonomische und ökologische Gesichtspunkte angestrebt.

Diese und weitere sich aus dem Stand der Technik in naheliegender Weise ergebenden Aufgaben werden durch die Angabe eines Verfahrens gemäß den Ansprüchen 1 bis 10 erfüllt.

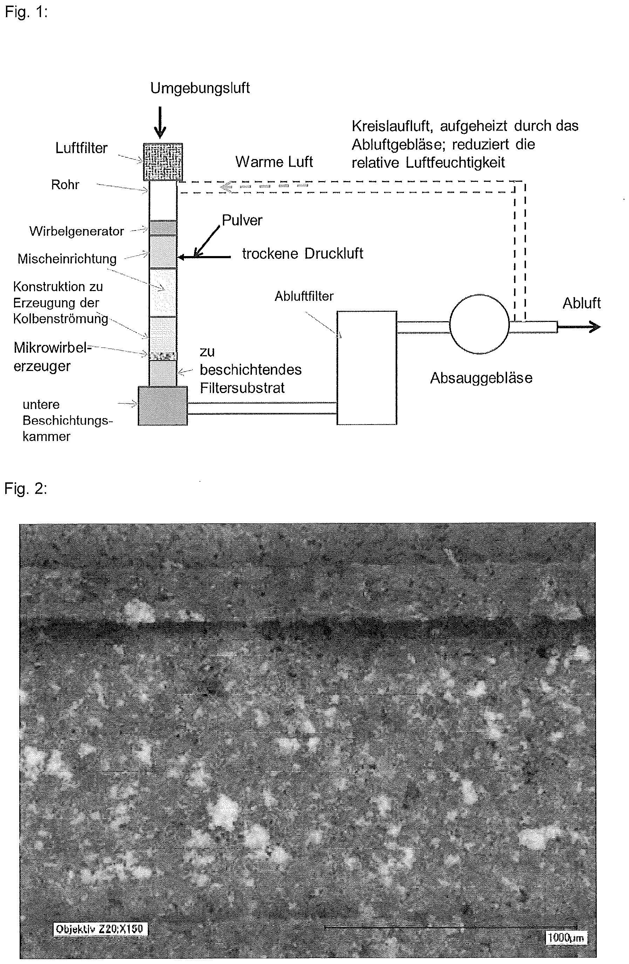

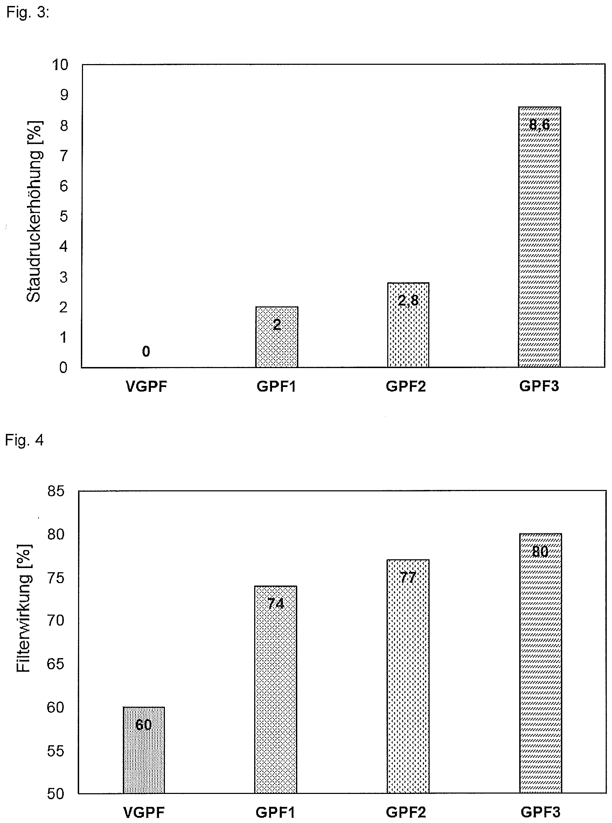

Dadurch, dass man in einem Verfahren zur Herstellung eines Wandflussfilters zur Verminderung der Schadstoffe im Abgas eines Verbrennungsmotors, einen trockenen Filter auf dessen Eingangsoberfläche dergestalt mit einem trockenen Pulver-Gas-Aerosol, welches zumindest eine hochschmelzende Verbindung aufweist, gezielt beaufschlagt, dass das Pulver sich in den Poren der Filterwände niederschlägt, und wobei man das Pulver im Gas dispergiert, anschließend in einen Gasstrom leitet und ohne weitere Zufuhr eines Gases in die Eingangsseite des Filters saugt, und wobei die Pulverbelegung einen zunehmenden Konzentrationsgradienten über die Länge des Filters von der Einlassseite zur Auslassseite aufweist, wobei sich der Gradient der Pulverkonzentration im Filter in axialer Richtung von der Einlassseite zur Auslassseite von negativen zu positiven Werten vergrößert, so dass wenn man den Filter entlang seiner Längsachse in drei gleich lange aufeinanderfolgende Bereiche einteilt, einlassseitig am Filter mehr Pulver abgeschieden wird als in der Mitte des Filters und auslassseitig mehr als einlassseitig, und keine komplette oder kontinuierliche Pulverschicht auf der Filterwand entsteht, und das Pulver-Gas-Aerosol mit einer Geschwindigkeit von 10 m/s bis 50 m/s durch den Filter gesaugt wird, gelangt man überaus erfolgreich zur Lösung der gestellten Aufgabe. Es wird angenommen, dass das trockene Verdüsen von ausreichend kleinen Pulverpartikeln im trockenen Zustand dazu führt, dass die Partikel im Gasstrom nicht agglomerieren. Das Beaufschlagen des trockenen, katalytisch beschichteten Filters mit dem trockenen Pulver-Gas-Aerosol führt dazu, dass sich die Pulverteilchen dem Strom des Gases folgend in den Poren des Filters abscheiden (Fig. 2). Hierdurch wird eine hervorragende Filtrationseffizienz eines z.B. katalytisch beschichteten Filters bei ausreichend geringem Abgasgegendruck erreicht (Fig. 3/4). Die hier hergestellten und mit Pulver beaufschlagten Filter unterscheiden sich von denen, die im Abgasstrang eines Fahrzeugs durch Ascheablagerung während des Betriebs entstehen. Erfindungsgemäß werden die Filter gezielt mit einem bestimmten, trockenen Pulver bestäubt. Dies führt dazu, dass die Balance zwischen Filtrationseffizienz und Abgasgegendruck von Anfang an gezielt eingestellt werden kann.

Als Wandflussmonolithe oder Wandflussfilter (kurz Filter) können alle im Stand der Technik üblichen keramischen Materialien eingesetzt werden. Bevorzugt werden poröse Wandflussfiltersubstrate aus Cordierit, Siliziumcarbid oder Aluminiumtitanat eingesetzt. Diese Wandflussfiltersubstrate weisen An- und Abströmkanäle auf, wobei jeweils die abströmseitigen Enden der Anströmkanäle und die anströmseitigen Enden der Abströmkanäle gegeneinander versetzt mit gasdichten "Stopfen" verschlossen sind. Hierbei wird das zu reinigende Abgas, das das Filtersubstrat durchströmt, zum Durchtritt durch die poröse Wand zwischen An- und Abströmkanal gezwungen, was eine exzellente Partikelfilterwirkung bedingt. Durch die Porosität, Poren-/Radienverteilung, und Dicke der Wand kann die Filtrationseigenschaft für Partikel ausgelegt werden. Die Porosität der unbeschichteten Wandflussfilter beträgt in der Regel mehr als 40%, generell von 40% bis 75%, besonders von 50% bis 70% [gemessen nach DIN 66133 - neueste Fassung am Anmeldetag]. Die durchschnittliche Porengröße der unbeschichteten Filter beträgt wenigstens 7 μm, z. B. von 7 μm bis 34 μm, bevorzugt mehr als 10 μm, insbesondere mehr bevorzugt von 10 μm bis 25 μm oder ganz bevorzugt von 15 μm bis 20 μm [gemessen nach DIN 66134 neueste Fassung am Anmeldetag]. Die fertiggestellten und mit Pulver beschichteten Filter mit einer Porengröße von in der Regel 10 μm bis 20 μm und einer Porosität von 50% bis 65% sind besonders bevorzugt.

Die Dispersion aus dem Gas und dem Pulver kann nach Maßgabe des Fachmannes hergestellt werden. Hierzu wird gemeinhin ein Pulver mit einem Gas vermischt. Dies kann auf verschiedene Arten erfolgen. Vorzugsweise wird die Dispersion des Pulvers durch mindestens eine der folgenden Maßnahmen generiert:

- Dispergieren mittels Druckluft

- Dispergieren mittels Ultraschall

- Dispergieren mittels Sieben

- Dispergieren mittels "in-situ-Mahlen"

- Dispergieren mittels eines Gebläses

- Dispergieren mittels Expansion von Gasen

- Dispergieren im Wirbelbett.

Diese Maßnahmen werden weiter hinten gesondert erläutert. Dieses so hergestellte Gemisch aus dem Gas und dem Pulver wird erst anschließend in einen bestehenden Gasstrom eingeleitet, welcher das fein verteilte Pulver in die Einlassseite des Wandflussfilters trägt. Dieser Prozess wird durch eine Saugvorrichtung, welche in der vom Filter abstromseitig befindlichen Rohrleitung positioniert ist, unterstützt. Dies steht im Gegensatz zur in der Figur 3 der US8277880B gezeigten Vorrichtung, bei der das Pulver-Gas-Aerosol direkt im Gasstrom erzeugt wird. Das erfindungsgemäße Verfahren erlaubt eine viel gleichmäßigere und gute Durchmischung des Gasstroms mit dem Pulver-Gas-Aerosol, was letztlich für eine vorteilhafte Verteilung der Pulverteilchen im Filter in radialer wie axialer Richtung sorgt und damit die Abscheidung der Pulverteilchen auf der Eingangsoberfläche des Filters vereinheitlichen und steuern hilft.

Unter Einlassseite wird der durch die Anströmkanäle gebildete Teil des Filters gesehen. Für die Auslassseite gilt entsprechendes. Die Eingangsoberfläche wird durch die Wandoberflächen der Anströmkanäle auf der Einlassseite des Wandflussfilters gebildet.

Als Gase zur Herstellung des Aerosols und zum Eintragen in den Filter können alle dem Fachmann für den vorliegenden Zweck infrage kommende Gase herangezogen werden. Ganz besonders bevorzugt ist der Einsatz von Luft. Es können jedoch auch andere Reaktionsgase herangezogen werden, die entweder eine oxidierende oder eine reduzierende Aktivität gegenüber dem eingesetzten Pulver entwickeln können. Ebenfalls kann sich bei bestimmten Pulvern der Einsatz von Edelgasen als vorteilhaft erweisen. Auch Mischungen der aufgezählten Gase sind vorstellbar.

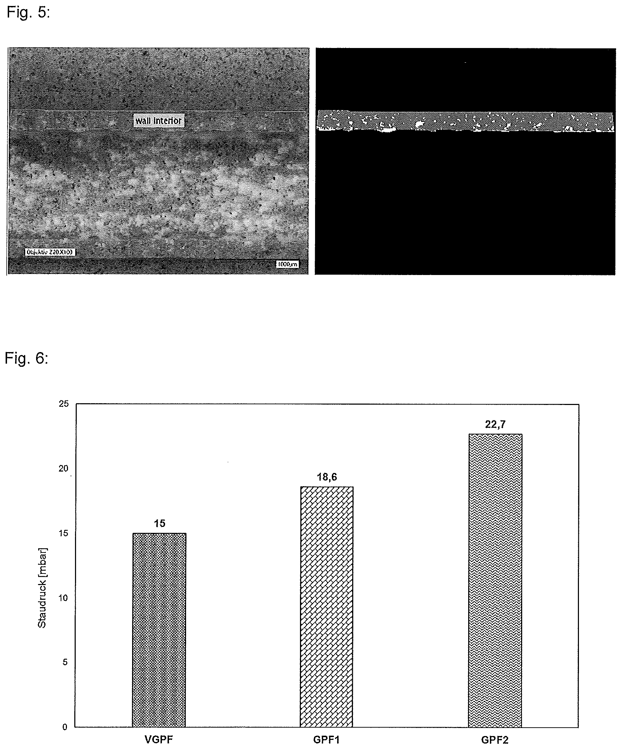

Durch die erfindungsgemäße Pulverbeschichtung wird demgemäß gezielt ein zunehmender Gradient hinsichtlich der Konzentration des Pulvers in Längsrichtung des Filters auf und/oder in der Eingangsoberfläche von der Einlass- zur Auslassseite hin eingestellt werden. Dieser kann durch ausgewählte Parameter eingestellt und auch variiert werden. Unter "zunehmenden Gradienten" wird erfindungsgemäß die Tatsache verstanden, dass sich der Gradient der Pulverkonzentration im Filter in axialer Richtung - von der Einlassseite zur Auslassseite - von negativen Werten hin zu positiveren Werten vergrößert. Erfindungsgemäß befindet sich dabei mehr Pulver in der Nähe der Ausgangsstopfen des Einlasskanals und deutlich weniger Pulver am Eingang des Filters. Zur Beschreibung des Gradienten wird der Filter entlang seiner Längsachse in drei gleich lange aufeinanderfolgende Bereiche eingeteilt. Der Konzentrationsgradient wird durch Variation der Bestäubungsgeschwindigkeit so eingestellt, dass einlassseitig am Filter mehr Pulver abgeschieden wird als in der Mitte des Filters und auslassseitig (am anderen Ende des Filters) mehr als einlassseitig. In einer bevorzugten Form ist der Filter in einem Bereich nahe der Einlassseite und in einem Bereich in der Mitte des Filters zu weniger als jeweils 40 % der Wandoberfläche des Eingangskanals mit Pulver belegt, während in einem Bereich nahe der Auslassseite mehr als 40 % der Wandoberfläche des Eingangskanals mit Pulver belegt sind, wobei in einer besonders bevorzugten Form in einem Bereich nahe der Einlassseite zwischen 5 % und 35 %, in einem Bereich in der Mitte des Filters zwischen 8 % und 38 % und in einem Bereich nahe der Auslassseite zwischen 40 % und 60 % der Wandoberfläche des Eingangskanals mit Pulver belegt sind und in einer ganz besonders bevorzugten Form in einem Bereich nahe der Einlassseite zwischen 5 % und 25 %, in einem Bereich in der Mitte des Filters zwischen 8 % und 30 % und in einem Bereich nahe der Auslassseite zwischen 45 % und 60 % der Wandoberfläche des Eingangskanals mit Pulver belegt sind. Der Belegungsgrad der Wandoberfläche wurde mittels Bildanalyse aus Lichtmikroskopiebildern (Fig. 5) bestimmt. Dabei wurden entsprechende Aufnahmen des Einlass- und Auslasskanals erstellt. In dieser Art der Analyse wird die durchschnittliche Farbe der Wandoberfläche des nicht mit Pulver belegten Auslasskanals als Referenz bestimmt. Diese Referenz wird von der entsprechenden Aufnahme der mit Pulver belegten Bereiche im Einlasskanal abgezogen, wobei der Farbabstand nach CIE76 der International Commission on Illumination mit einem geringsten noch unterscheidbaren Farbabstand von 2,33 festgelegt wurde (https://en.wikipedia.org/wiki/Co-lor_difference#CIE76).

Der bei der Pulverbeschichtung entstandene Gradient ist vorteilhaft für eine weiterhin erhöhte Filtrationseffizienz. Dabei füllt das Pulver insbesondere die großen Poren des Filtersubstrats auf. Erfindungsgemäß entsteht bei diesem Prozess keine "Pulvermembran" - also keine komplette oder kontinuierliche Pulverschicht (Definition siehe weiter hinten) - auf der Filterwand. Simulationsergebnisse haben folgendes Bild diesbezüglich ergeben (Tabelle 1).

Tabelle 1 - Pulververteilung über den Filter bei verschiedenen Raumgeschwindigkeiten des Gases:

| Kanallänge | Mengenstrom | | |
|---|---|---|---|
| | 10m/s | 20m/s | 40m/s |
| 1/3 | 26% | 18% | 11% |
| 2/3 | 16% | 12% | 9% |
| 3/3 | 58% | 69% | 80% |

Simulationsberechnungen nach ist für die Filtrationseigenschaft des Gesamtfilters hauptsächlich (zu mehr als 50 %) das letzte Drittel des Substrats verantwortlich. Durch eine verstärkte Aufbringung einer Pulverbeschichtung im letzten Drittel des Filters wird der Staudruck dort verstärkt erhöht, was auf die geringere Permeabilität zurückzuführen ist, und die Durchströmung verschiebt sich mehr in die ersten zwei Drittel des Filters. Daher sollte der bestäubte Filter einen stärker steigenden Gradienten der Beschichtung vom Eingang zum Ausgang hin aufweisen, um seine Filtrationswirkung zu erhöhen. Für das Einstellen eines vorteilhaften Abgasgegendrucks gilt dies mutatis mutandis. Hier sollte demgemäß ggf. ein weniger stark zunehmender Gradient der Konzentration des Pulvers eingestellt werden.

Weiterhin ist eine bevorzugte Ausführung der Pulverbelegung dadurch gekennzeichnet, dass bei Verwendung von Filtersubstraten mit quadratischen Kanälen die Pulverbelegung in den Ecken der Kanäle höher ist als in der entsprechenden Mitte der Eingangsoberfläche. Dies hat einen weiterhin verbesserten Effekt auf die Filtrationseffizienz bei nicht über die Maßen steigendem Abgasgegendruck. Mit dem Ausdruck "der entsprechenden Mitte" ist die Stelle in der Mitte des Eingangskanals zwischen den Ecken der Kanäle gemeint, die in axialer Richtung den gleichen Abstand zum Einlassende aufweist, wie die entsprechende Stelle in den Ecken der Kanäle.

Das Pulver-Gas-Aerosol sollte trocken in einen trockenen Filter einfließen. Trocken im Sinne der vorliegenden Erfindung bedeutet demgemäß den Ausschluss der Anwendung einer Flüssigkeit, insbesondere Wasser. Insbesondere die Herstellung einer Suspension des Pulvers in einer Flüssigkeit zur Verdüsung in einen Gasstrom sollte vermieden werden. Sowohl für den Filter als auch für das Pulver kann eine gewisse Feuchte ggf. tolerierbar sein, sofern das Erreichen des Ziels - die Abscheidung des Pulvers in den Poren - nicht negativ beeinflusst wird. In der Regel ist das Pulver rieselfähig und durch Energieeintrag zerstäubbar. Die Feuchtigkeit des Pulvers bzw. des Filters im Zeitpunkt der Beaufschlagung mit dem Pulver sollte weniger als 20 %, bevorzugt weniger als 10 % und ganz besonders bevorzugt weniger als 5 % (gemessen bei 20°C und Normaldruck ISO 11465 neueste Fassung am Anmeldetag) betragen. Sofern notwendig kann die rel. Feuchte gezielt durch reproduzierbar trockenes und/oder vorgewärmtes Gas, vorteilhaft Luft, weiter erniedrigt werden. Dies hilft dahingehend, dass Pulverteilchen im Gasstrom nicht agglomerieren. Alternativ und/oder ergänzend kann ein ionisierter Gas- oder Luftstrom angeboten werden, der ebenfalls dem Agglomerieren der Teilchen entgegenwirkt.

Der Fachmann scheidet das Pulver erfindungsgemäß überwiegend in den Poren der Wände des Wandflussfilters ab. Eine Schicht des Pulvers auf der Eingangsoberfläche des Filters wird vermieden. Das abzuscheidende Pulver sollte daher eine bestimmte Menge nicht überschreiten. Ansonsten würden sich die Poren erfindungsgemäß füllen und alles weitere Material würde sich dann nur noch auf den Kanalwänden des Wandflussfilters absetzen können. Für diesen Fall beträgt die Obergrenze der Beladung des Wandflussfilters mit dem Pulver je nach Porosität und Porengröße des Wandflussfilters einen Wert, bei dem die gasdurchlässigen Poren in der Eingangsoberfläche mit dem Pulver aufgefüllt sind und sich noch keine komplette oder kontinuierliche, zusammenhängende Pulverschicht auf den Eingangsoberflächen abgeschieden hat. Besonders bevorzugt werden die gasdurchlässigen Poren nur bis deren Oberfläche an der Eingangsoberfläche hin mit Pulver aufgefüllt. In der Regel liegt die Beladung des Filters mit dem Pulver bei nicht mehr als 50 g/l bezogen auf das Filtervolumen. Bevorzugt beträgt der Wert nicht mehr als 20 g/l, ganz besonders bevorzugt nicht mehr als 10 g/l. Eine untere Grenze bildet naturgemäß die angestrebte Erhöhung der Filtrationseffizienz. Besonders bevorzugt in diesem Zusammenhang ist, wenn die Menge an im Filter verbleibendem Pulver unterhalb von 50 g/l liegt und die Pulverbelegung einen erfindungsgemäß zunehmenden Konzentrationsgradienten über die Länge des Filters von der Einlassseite zur Auslassseite aufweist. Pulver, welche bevorzugt in der vorliegenden Erfindung zur Erzeugung des Aerosols herangezogen werden, sind dem Fachmann hinlänglich bekannt. In der Regel sind dies hochschmelzende Metallverbindungen, die gemeinhin als Trägermaterialien für Katalysatoren im Autoabgasbereich herangezogen werden. Bevorzugt werden entsprechende Metalloxid-, Metallsulfat-, Metallphosphat-, Metallcarbonat- oder Metallhydroxidpulver oder deren Mischungen eingesetzt. Die für die Metallverbindungen infrage kommenden Metalle sind insbesondere solche ausgewählt aus der Gruppe der Alkali-, Erdalkali- bzw. Erdmetalle oder Übergangsmetalle. Bevorzugt werden solche Metalle ausgewählt aus der Gruppe Calcium, Magnesium, Strontium, Barium, Aluminium, Silizium, Titan, Zirkon, Cer eingesetzt. Diese Metalle können vorzugsweise wie gesagt als Oxide eingesetzt werden. Ganz besonders bevorzugt ist der Einsatz von Ceroxid, Titandioxid, Zirkondioxid, Siliziumdioxid, Aluminiumoxid oder Mischungen oder Mischoxiden derselben. Ganz besonders bevorzugt ist der Einsatz von einem Aerosol, welches ein Gemisch aus Luft und einem dieser Metalloxidpulver darstellt. Unter dem Begriff Mischoxid (feste Lösungen von einem Metalloxid in mindestens einem anderen) wird vorliegend auch der Einsatz von Zeolithen und Zeotypen verstanden. Im Rahmen der Erfindung sind Zeolithe und Zeotype definiert wie in der WO2015049110A1.

Für eine bessere Abscheidung der Rußpartikel ist eine ausreichende, umströmte Oberfläche vorteilhaft (siehe unten). Bevorzugt sollte die gesamte äußere Oberfläche des Pulvers in den Poren der Filterwände größer als 5 m² pro Liter, bevorzugt größer 10 m² und ganz bevorzugt größer 15 m² bezogen auf das äußere Filtervolumen in Litern betragen.

Die Gesamtoberfläche der Partikel SV ergibt sich mit der Partikelgröße x gemäß:

$$S_V[m^{-1}] = 6 \cdot \int_{x\_min}^{x\_max} x_i^{-1} \cdot q_0(x_i) \cdot dx = 6 \cdot \sum_{min}^{max} \frac{\Delta Q_3(x_i)}{x_i}$$

(M. Stieß, Mechanische Verfahrenstechnik - Partikeltechnologie 1, Springer, 3. Auflage 2009, Seite 35), und mit der Dichte der Partikel p erhält man daraus die massebezogene Oberfläche (M. Stieß, Mechanische Verfahrenstechnik - Partikeltechnologie 1, Springer, 3. Auflage 2009, Seite 16):

$$S_m \left[ \frac{m^2}{kg} \right] = \frac{S_V}{\rho_{Partikel}}$$

$$\text{äußere Oberfläche des Pulvers } S_{\text{äußere}} [m^2] = S_m \cdot m_{Pulver}$$

Eine lockere Vernetzung des Pulvers ist für einen niedrigen Druckverlust und die gleichzeitig gute Haftung in den Poren des Substrats vorteilhaft. Dies wird durch Pulver mit einer definierten Korngrößenverteilung erreicht. Für die großen Poren muss ein Anteil an größeren Partikeln vorhanden sein. Dabei sollte das verwendete Pulver eine breite, idealerweise eine mindestens bimodale Korngrößenverteilung aufweisen. Die lockere Vernetzung des Pulvers in den Poren des Substrats kann vorteilhafterweise insbesondere durch Pulver mit einer multimodalen oder breiten q3-Korngrößenverteilung erreicht werden. Die multimodale Partikelverteilung kann durch z. B. das Abmischen von Pulvern mit unterschiedlichen d50-Werten erzeugt werden.

Für die Definition der Korngrößenverteilung des Pulvers unterscheidet man in Abhängigkeit von der Methode, mit der die Menge der Partikel bestimmt wird, u.a. zwischen anzahlbezogenen (q0) und volumenbezogenen (q3) Korngrößenverteilungen (M. Stieß, Mechanische Verfahrenstechnik - Partikeltechnologie 1, Springer, 3. Auflage 2009, Seite 29).

Dabei sollte die Größe der groben Partikel (definiert durch den d90-Wert der q3-Korngrößenverteilung, gemessen mit Tornado-Trockendispergierungsmodul der Firma Beckmann gemäß neuester ISO 13320-1 am Anmeldetag) des verwendeten Pulvers kleiner oder gleich 60 % der mittleren volumenbezogenen q3-Porengröße (d50) des verwendeten Filters (gemessen nach DIN 66134 - neueste Fassung am Anmeldetag) sein, bevorzugt kleiner 50 %. Die mittlere q3-Korngröße des Pulvers (d50) sollte 5 % bis 30 % der mittleren q3-Porengröße (d50) des verwendeten Filters, bevorzugt 7 % bis 25 % und sehr bevorzugt 10 % bis 25 % entsprechen. Der d10-Wert der q3-Korngößenverteilung des Pulvers, welcher den Feinanteil des Pulvers beschreibt, sollte 20 % bis 60 % der mittleren q3-Korngröße (d50) des Pulvers, bevorzugt 25 % bis 50 % und besonders bevorzugt 25 % bis 40% betragen. Der d10-Wert der anzahlbezogenen q0-Korngrößenverteilung sollte allgemein größer 0,05 µm, bevorzugt größer 0,08 µm und besonders bevorzugt größer 0,1 µm.

Ein weiteres Merkmal eines vorteilhaften erfindungsgemäßen Filters ist, dass sich die eingelagerten Pulverpartikel vor allem in den großen und somit durchströmten Poren des Filters befinden sollten. Damit der Staudruckanstieg nach der Bestäubung möglichst gering ist, darf das Pulvervolumen, welches der Aufsummierung aller einzelnen Partikelvolumina entspricht, nicht zu hoch sein. Zur Bestimmung eines geeigneten Bereichs des Pulvervolumens und damit der geeigneten Pulvermenge, unabhängig vom Pulvermaterial, wird aus Pulvermasse und Porosität das Pulvervolumen errechnet. Dabei ergibt sich, dass vorteilhafterweise maximal 10 % des gesamten Porenvolumens des Filtersubstrats mit Partikeln gefüllt sein sollten, dabei bevorzugt zwischen 1 % und 5 % und besonders bevorzugt zwischen 1,5 % und 3 %. Das gefüllte Porenvolumen in % entspricht dem Verhältnis der Summe des Volumens aller Pulverpartikel zum Porenvolumen des zu beschichtenden Filters.

Weiterhin ist eine bevorzugte Ausführung der Pulverbelegung dadurch gekennzeichnet, dass 5 % bis 35 % des gesamten Porenvolumens der porösen Filterwand zwischen Einlass- und Auslasskanälen mit einer lockeren Pulverschüttung gefüllt ist, besonders bevorzugt 5 % bis 25 %, ganz besonders bevorzugt 8 % bis 15 %. Der Belegungsgrad des Porenvolumens der porösen Filterwände wurde mittels Bildanalyse aus Lichtmikroskopiebildern bestimmt (Bereich "wall interior" in Fig. 5). Dabei wurden entsprechende Aufnahmen des Einlass- und Auslasskanals erstellt. In dieser Art der Analyse wird die durchschnittliche Farbe der Wandoberfläche des nicht mit Pulver belegten Auslasskanals als Referenz bestimmt. Diese Referenz wird von der entsprechenden Aufnahme der mit Pulver belegten Bereiche in der Wand abgezogen, wobei der Farbabstand nach CIE76 der International Commission on Illumination mit einem geringsten noch unterscheidbaren Farbabstand von 2,33 festgelegt wurde (https://en.wikipedia.org/wiki/Color_diffe-rence#CIE76).

In einer bevorzugten Ausführungsform kann der Filter vor der Beaufschlagung mit dem Pulver-Gas-Aerosol katalytisch beschichtet worden sein. Unter katalytischer Beschichtung wird vorliegend die Fähigkeit verstanden, schädlich Bestandteile des Abgases von Verbrennungsmotoren in weniger schädliche zu verwandeln. Insbesondere sind hier die Abgasbestandteile NOx, CO und HC sowie Partikel zu nennen. Diese katalytische Aktivität wird nach Maßgabe des Fachmanns durch eine Beschichtung des Wandflussfilters mit einem katalytisch aktiven Material bereitgestellt. Unter dem Begriff des Beschichtens wird demgemäß das Aufbringen von katalytisch aktiven Materialien auf den Wandflussfilter verstanden. Die Beschichtung übernimmt die eigentliche katalytische Funktion. Vorliegend erfolgt die Beschichtung durch das Aufbringen einer entsprechend wenig viskosen wässrigen Suspension - auch Washcoat genannt - oder Lösung der katalytisch aktiven Komponenten auf den Wandflussfilter, siehe z. B. gemäß EP1789190B1. Nach dem Aufbringen der Suspension/Lösung wird der Wandflussfilter getrocknet und gegebenenfalls bei erhöhter Temperatur kalziniert. Der katalytisch beschichtete Filter besitzt vorzugsweise eine Beladung von 20 g/l bis 200 g/l, vorzugsweise 30 g/l bis 150 g/l. Die geeignetste Beladungsmenge eines in der Wand beschichteten Filters hängt von seiner Zelldichte, seiner Wandstärke und der Porosität ab. Bei gängigen mittelporösen Filtern (<60% Porosität) mit z.B. 200 cpsi Zelldichte und 8 mil Wandstärke liegt die bevorzugte Beladung bei 20 g/l bis 50 g/l (bezogen auf das äußere Volumen des Filtersubstrats). Hochporöse Filter (>60% Porosität) mit z.B. 300 cpsi und 8 mil haben eine bevorzugte Beladungsmenge von 25 g/l bis 150 g/l besonders bevorzugt von 50 g/l bis 100 g/l.

Im Prinzip sind alle dem Fachmann für den Autoabgasbereich bekannten Beschichtungen für die vorliegende Erfindung geeignet. Bevorzugt kann die katalytische Beschichtung des Filters ausgewählt sein aus der Gruppe bestehend aus Dreiwegkatalysator, SCR-Katalysator, Stickoxidspeicherkatalysator, Oxidationskatalysator, Rußzündbeschichtung. Hinsichtlich der einzelnen in Frage kommenden katalytischen Aktivitäten und deren Erklärung wird auf die Ausführungen in der WO2011151711A1 verwiesen. Besonders vorteilhaft besitzt dieser eine katalytisch aktive Beschichtung aus mindestens einem metallionenausgetauschten Zeolithen, Cer/Zirkoniummischoxid, Aluminiumoxid und Palladium, Rhodium oder Platin oder Kombinationen dieser Edelmetalle erhält.

Das Pulver kann erfindungsgemäß wie oben beschrieben als solches eingesetzt werden. Ebenfalls vorstellbar ist jedoch der Einsatz von trockenem Pulver, welches eine katalytische Aktivität im Hinblick auf die Abgasnachbehandlung trägt. Demzufolge kann das Pulver selbst ebenfalls hinsichtlich der Verminderung der Schadstoffe im Abgas eines Verbrennungsmotors katalytisch aktiv sein. Hierfür kommen alle dem Fachmann bekannten Aktivitäten in Betracht, wie z. B. TWC-, DOC-, SCR-, LNT- oder den Rußabbrand beschleunigende Katalysatoren. Gemeinhin wird das Pulver die gleiche katalytische Aktivität aufweisen, wie eine ggf. nachfolgende katalytische Beschichtung des Filters. Hierdurch wird die katalytische Gesamtaktivität des Filters gegenüber nicht mit katalytische aktivem Pulver beschichteten Filtern nochmals gesteigert. Insofern kann es sein, dass zum Beispiel Aluminiumoxid mit einem Edelmetall imprägniert für die Herstellung des Pulver-Gas-Aerosols herangezogen wird. Ebenfalls vorstellbar ist, dass für die SCR-Reaktion katalytisch aktives Material eingesetzt wird. Dabei kann das Pulver zum Beispiel aus mit Übergangsmetallionen ausgetauschten Zeolithen oder Zeotypen bestehen. Ganz besonders bevorzugt ist der Einsatz von Eisen und/oder Kupfer ausgetauschten Zeolithen in diesem Zusammenhang. Äußerst bevorzugt wird als Material zur Herstellung des Pulver-Gas-Aerosols CuCHA (Kupfer ausgetauschtes Chabasit; http://eu-rope.iza-structure.orq/IZA-SC/framework.php?STC=CHA) oder Cu-AEI (http://eu-rope.iza-structure.org/IZA-SC/framework.php?STC=AEI) verwendet.

Um das Pulver ausreichend tief in die Poren an der Oberfläche der Filterwand auf der Einlassseite des Filters ziehen zu können, ist eine gewisse Saugleistung von Nöten. Der Fachmann kann sich hier in orientierenden Versuchen für den jeweiligen Filter und das jeweilige Pulver selbst ein Bild machen. Erfindungsgemäß wird das Aerosol (Pulver-GasGemisch) mit einer Geschwindigkeit von 10 m/s bis 50 m/s, mehr bevorzugt 10 m/s bis 40 m/s und ganz besonders bevorzugt 15 m/s bis 35 m/s durch den Filter gesaugt. Hierdurch wird ebenfalls eine vorteilhafte Adhäsion des applizierten Pulvers erreicht. Der Druckabfall über den Filter liegt in der Regel bei >100 mbar, vorzugsweise bei > 150 mbar und ganz besonders bevorzugt bei > 200 mbar beim Einsaugen des Aerosols. Bei schlecht haftenden Pulvern kann ggf. eine Nachbehandlung mit einem verklebenden Agens helfen. Eine Verdichtung des Pulvers in den Poren des Filters kann auch durch einen ausreichend hohen Saugimpuls (>200 mbar) am Ende des Beschichtungsprozederes erreicht werden.

In einer bevorzugten Ausführungsform wird zumindest ein Teilgasstrom abstromseitig von der Saugvorrichtung entnommen und vor der Pulverzugabe dem Gasstrom, welcher durch den Filter gesaugt wurde, wieder zugegeben.

Dadurch wird das Pulver in einen schon erwärmten Luftstrom zudosiert. Die Sauggebläse für die nötigen Drücke erzeugen ca. 70°C Ablufttemperatur, da die installierte Saugleistung bevorzugt >20KW ist. Energetisch optimiert wird die Abwärme des Sauggebläses zum Aufheizen der Zuluft genutzt, um die relative Feuchte der Zuluft zu vermindern. Dies wiederum reduziert die Haftung der Partikel untereinander und an den Eingangsstopfen. Der Ablagerungsprozess des Pulvers kann damit besser gesteuert werden.

In dem vorliegenden Verfahren zur Herstellung eines Wandflussfilters wird ein Gasstrom mit einem Pulver-Gas-Aerosol beaufschlagt und dieser in einen Filter eingesaugt. Dadurch wird erreicht, dass das Pulver sich in dem Gasstrom ausreichend gut verteilen kann, um auf der Einlassseite des Wandflussfilters in die Einlasskanäle des Filters eindringen zu können. Die homogene Mischung des Pulvers in dem Gas/der Luft erfordert eine intensive Durchmischung. Dafür sind dem Fachmann beispielsweise Diffusoren, Venturimischer und statische Mischer bekannt. Besonders geeignet für den Pulverbeschichtungsprozess sind Mischeinrichtungen, die Pulverablagerungen vermeiden. Damit kommen für diesen Prozess Diffusoren und Venturirohre bevorzugt zum Einsatz. Bewährt hat sich auch der Eintrag des dispergierten Pulvers in eine schnelldrehende rotierende Strömung mit einer hohen Turbulenz.

Zur Erreichung einer vorteilhafter Weise gleichmäßigen Verteilung des Pulvers über den Querschnitt des Filters sollte das das Pulver transportierende Gas eine Kolbenströmung (möglichst gleiche Geschwindigkeit über den Querschnitt) beim Auftreffen auf den Filter aufweisen. Dies wird bevorzugt durch eine beschleunigte Strömung vor dem Filter eingestellt. Wie dem Fachmann bekannt ist, bewirkt eine stetige Verkleinerung des Querschnitts ohne abrupte Veränderungen eine solche beschleunigte Strömung, beschrieben durch die Kontinuitätsgleichung. Des Weiteren ist dem Fachmann dann auch bekannt, dass sich damit das Strömungsprofil stärker einem Kolbenprofil annähert. Zur gezielten Veränderung der Strömung können Einbauten wie z.B. Siebe, Ringe, Scheiben, etc. unterhalb und/oder oberhalb des Filters eingesetzt werden.

In einer weiterhin vorteilhaften Ausgestaltung der vorliegenden Erfindung besitzt die Apparatur zur Pulverbeschichtung eine oder mehrere Vorrichtungen (Turbulatoren, Vortexgeneratoren), mit denen der das Pulver-Gas-Aerosol tragende Gasstrom vor dem Auftreffen auf den Filter verwirbelt werden kann. Als Beispiel hierfür können entsprechende Siebe oder Gitter dienen, die in einer ausreichenden Entfernung anströmseitig zum Filter platziert werden. Die Entfernung sollte nicht zu groß oder klein sein, so dass eine ausreichende Verwirbelung des Gasstroms direkt vor dem Filter erreicht wird. Der Fachmann kann die Entfernung in einfachen Versuchen ermitteln. Der Vorteil dieser Maßnahme liegt darin begründet, dass sich keine Pulverbestandteile auf den Eingangsstopfen der Auslasskanäle abscheiden und alles Pulver in die Eingangskanäle eindringen kann. Demzufolge ist erfindungsgemäß bevorzugt, wenn das Pulver vor dem Einströmen in den Filter dergestalt verwirbelt wird, dass Ablagerungen von Pulver auf den Einganstopfenstopfen des Wandflussfilters möglichst vermieden werden. Ein Turbulator oder Turbulenz- oder Vortexgenerator bezeichnet in der Aerodynamik Gerätschaften, die eine künstliche Störung der Strömung verursachen. Wie dem Fachmann bekannt, bilden sich hinter Stäben, Gittern und anderen die Strömung störenden Einbauten bei entsprechenden Re-Zahlen Wirbel (insbesondere Mikrowirbel). Bekannt ist die Karmansche Wirbelstraße (H. Benard, C. R. Acad. Sci. Paris Ser. IV 147, 839 (1908); 147, 970 (1908); T. von Karman, Nachr. Ges. Wiss. Göttingen, Math. Phys. Kl. 509 (1911); 547 (1912)) und die Wirbelschleppe hinter Flugzeugen, die Dächer abdecken kann. Dieser Effekt kann in dem erfindungsgemäßen Fall ganz besonders vorteilhaft durch vibrierende selbstabreinigende Siebe (sogenannte Ultraschallsiebe), die sich vorteilhafterweise in der Strömung bewegen, noch verstärkt werden. Eine andere Methode ist die Störung der Strömung durch Schallfelder, die durch die Druckamplituden die Strömung zu Turbulenzen anregt. Diese Schallfelder können sogar die Oberfläche des Filters ohne Strömung reinigen. Die Frequenzen können von Ultraschall bis zum Infraschall reichen. Letztere Maßnahmen werden auch zur Rohrreinigung in großtechnischen Anlagen eingesetzt.

Das Pulver lagert sich erfindungsgemäß vorzugsweise in den zugänglichen Poren der Filterwände ab, ohne eine partielle oder kontinuierliche Schicht auf der Filterwand in den Einlasskanälen auszubilden (Fig. 2). Ein zunehmender Konzentrationsgradient des Pulvers über die axiale Länge des Trägers kann-wie vorne beschrieben - vorteilhaft z. B. durch Verwendung unterschiedlicher Strömungsbrecher im Aerosol-Gasstrom vor der Einlassseite des Trägers sowie durch Anpassung der Beschichtungsparameter wie Strömungsgeschwindigkeit der Trägerluft und Zerstäuberluft beeinflusst werden. Auch die physikalischen Parameter des verwendeten Pulvers wie z.B. die Schüttdichte, Restfeuchtegehalt und Partikelgrößenverteilung können gezielt zur Ausbildung des gewünschten und weiter vorne beschriebenen Gradienten verwendet werden. Die Zugabe kann in kontinuierlicher Weise erfolgen, bis die ausreichende Menge an Pulver im Filter abgeschieden ist. Ebenfalls möglich ist eine pulsierte Zugabe dergestalt, dass man das mit Druckgas beaufschlagte Pulver periodisch in den durch den Filter gesaugten Gasstrom so lange eindosiert, bis die ausreichende Menge an Pulver im Filter abgeschieden ist. Apparate und Verfahren, bei denen eine solche Dosierung eines Pulvers beschrieben wird, werden im Stand der Technik gewürdigt (DE4225970C1, US8495968B2, US8632852B2, US8534221B2, US8277880B2; siehe auch weiter vorne).

Vorteilhafte Verfahren zur Herstellung des Pulver-Gas-Aerosols wurden weiter vorne schon erwähnt. Im Prinzip ist der Fachmann frei darin eine Methode zur Herstellung des Pulver-Gas-Aerosols zu wählen. Vorteilhaft sind z.B. die im folgenden genannten Aerosolverfahren.

Dispergieren mit Druckluft:

Die Herstellung von Pulver-Gas-Aerosolen mittels Druckluft ist dem Fachmann hinlänglich bekannt. Beispielhaft werden derartige Pulver-Gas-Gemische in Inhalatoren oder Pulverfeuerlöschern sowie in Sandstrahlgebläsen, z.B. beschrieben in US108408, verwendet. Im Prinzip werden hier die Gemische unter Zuhilfenahme von Druck, insbesondere Druckluft hergestellt. Die Dispergierung kann aufgrund von Strömungsbelastungen (Beschleunigungsströmung, Scherfeld, turbulente Strömung) erfolgen. Die Dispergierungsenergie wird durch die Gasgeschwindigkeit, die eine Funktion des angelegten Drucks und des Düsendurchmessers ist, bestimmt. Derartige Apparaturen können auch in der US20010003351A1 oder US6220791B1 und dort zitierter Literatur gefunden werden.

Dispergieren mittels Ultraschall:

Die Herstellung einer definierten Korngrößenverteilung in der Gasphase kann auch durch ein Ultraschallfeld mit fortschreitender oder stehender Welle geschehen. In der WO05022667A2 wird die Dispergierung von Pulver in einem Ultraschallfeld beschrieben. Die Zugabe des Pulvers zum Ultraschallfeld-Feld kann hierbei beispielsweise im freien Fall (Fig. 8) oder durch die Zugabe in ein Sieb, das sich im Ultraschall-Feld befindet (Fig. 9), durch eine vordispergierte Einbringung mit Hilfe eines Siebes im freien Fall erfolgen (Fig. 10) oder durch einen Luftstrom erfolgen.

Dispergieren mittels Sieben:

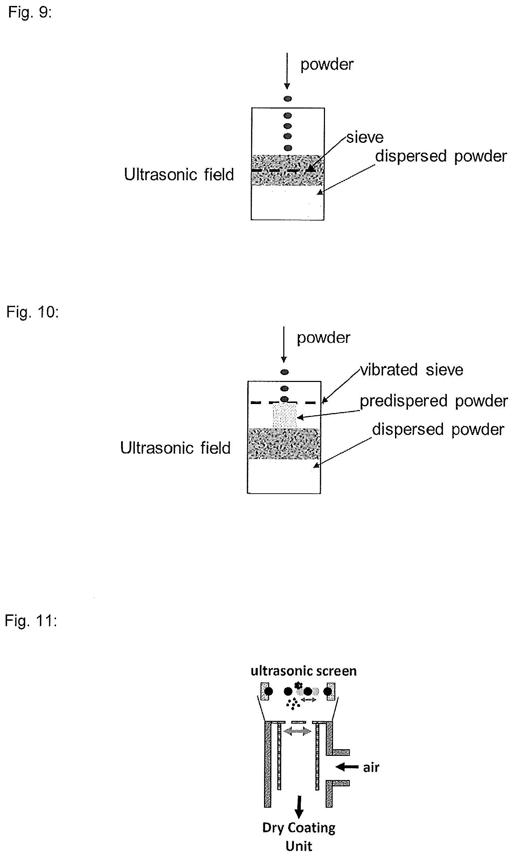

Das Pulver kann mit Hilfe eines Luftstrahlsiebes (DE102010015364A1; DE19921409A1 und dort zitierter Literatur) und/oder eines Ultraschallsiebes dispergiert werden (Fig. 11). Das Pulver kann mittels eines Ultraschallsiebbodens (US-Sieb), welches oberhalb des Lufteinlasses platziert ist, desagglomeriert werden. Bei einem US-Sieb schwingt das Siebgitter mit einer Frequenz im kHz-Bereich. Die Amplituden liegen hierbei im $\mu$m-Bereich. Durch die Bewegung des Siebgitters kommt es zu einer Prallbeanspruchung der auf dem Sieb platzierten Agglomerate durch das Siebgitter. Diese Beanspruchung führt zur Desagglomeration. Die Dispergierenergie wird durch die Bewegungsenergie des Siebgitters, welche eine Funktion der Amplitude und der Schwingfrequenz ist, bestimmt. Nach der Beanspruchung fallen die desagglomerierten Partikel durch den Siebboden und werden der dem Gasstrom zugeführt.

Dispergieren mittels "in-situ-Mahlen":

Das Pulver kann z.B. in einer Strahlmühle dispergiert werden. Hierbei sind in einem Mahlraum mehrere Düsen tangential angeordnet, wobei die Düsen kritisch (mit Überschallströmung) betrieben werden können. Das Pulver wird in den Mahlraum dosiert und in den Gasströmungen beschleunigt. Die Dispergierung findet aufgrund von Partikel-Partikel-Stößen statt. Die Dispergierenergie wird hauptsächlich durch Kollisionsgeschwindigkeit der Agglomerate bestimmt. Vorteilhaft bei dieser Mühle ist die geringe Neigung zur Verunreinigung des partikulären Materials mit Material aus der Mühle, da die Zerkleinerung durch Partikel-Partikel-Wechselwirkungen stattfindet.

Das Pulver kann auch einer Stiftmühle dispergiert werden, wenn die Härte des Pulvers das erlaubt. Das Pulver wird dem Mahlraum zugegeben in dem ein Teller rotiert auf dem metallische Mahlstifte angebracht sind. Die Desagglomeration wird durch die Kollision der Agglomerate mit den Stiften verursacht. Die Dispergierenergie wird hierbei von der Umfangsgeschwindigkeit (Drehzahl x Tellerdurchmesser) bestimmt. Voraussetzung für die Kollision mit den Mahlstiften ist eine ausreichende Trägheit der Agglomerate, die durch die Stokes-Zahl/Trägheitsparameter für die Kollisionsbedingungen beschrieben werden kann.

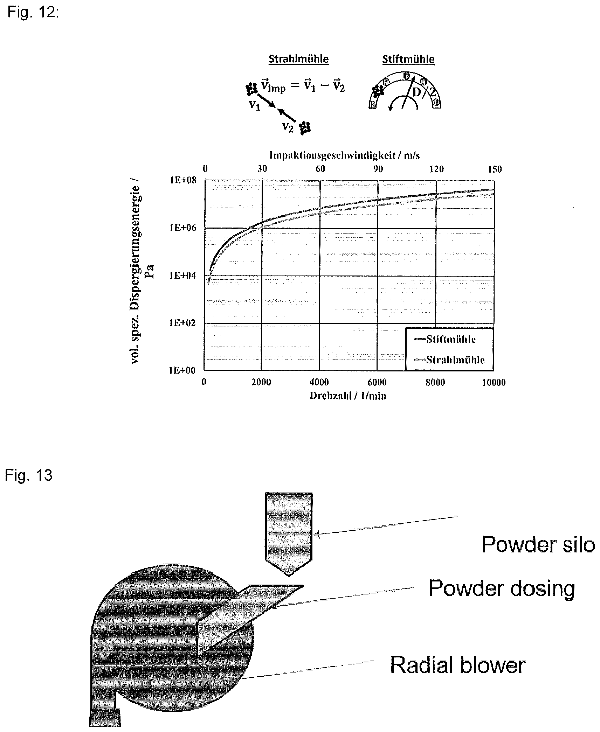

In der Fig. 12 sind die Dispergierenergien in einer Strahl- und Stiftmühle dargestellt. Bei entsprechender Wahl der Betriebsparameter werden in beiden Mühlen ähnliche Dispergierenergien erreicht. Der variable Betriebsparameter ist in der Strahlmühle die Impaktionsgeschwindigkeit der Partikel, die über den Düsenvordruck geregelt wird. Bei der Stiftmühle ist der variable Betriebsparameter die Drehzahl. Für sehr leicht zu dispergierende Pulver könnte sogar ein Abweiseradsichter eingesetzt werden. Die Dispergierung wirkt nach demselben Prinzip wie bei einer Stiftmühle. Zusätzlich zur Dispergierung durch die Kollision mit den Sichtschaufeln findet aufgrund der Strömungsführung eine Klassierung der Agglomerate statt. Agglomerate mit einer Größe oberhalb des Trennkorns verbleiben im Sichtraum. Die Dispergierenergie wird von der Umfangsgeschwindigkeit des Sichtrades bestimmt. Voraussetzung für die Kollision mit den Sichtschaufeln ist eine ausreichende Trägheit der Agglomerate, die durch die Stokes-Zahl/Trägheitsparameter für die Kollisionsbedingungen (Strömungsbedingungen und Geometrie der Schaufeln) beschrieben wird.

Dispergieren mittels Gebläse:

In dieser Ausführungsform wird das Pulver in ein Gebläse dosiert (Fig. 13). Im Gebläse kollidieren die Agglomerate mit den Rotoren, wodurch es zur Beanspruchung des Pulvers kommt, was zur Dispergierung führt. Die Dispergierenergie wird hierbei von der Umfangsgeschwindigkeit (Drehzahl x Rotordurchmesser) sowie dem radialen Auftreffort auf den Rotoren bestimmt. Voraussetzung für die Kollision mit den Rotorblättern ist eine ausreichende Trägheit der Agglomerate, die durch die Stokes-Zahl/Trägheitsparameter für die Kollisionsbedingungen beschrieben wird. Zusätzlich zur Kollisionsbeanspruchung wirken aufgrund der Geschwindigkeitsgradienten und Verwirbelungen in den Apparaten Strömungsbeanspruchungen, die ebenfalls zur Dispergierung führen. Die durch die Strömungsbeanspruchungen wirkende Dispergierenergie wird durch die Umfangsgeschwindigkeit und Rotorausführung bestimmt. Die Trägheit der Partikel ist für die Dispergierung im erzeugten Strömungsfeld unerheblich.

Dispergieren mittels Expansion:

Partikel in der Gasphase können ebenfalls dispergiert werden, in dem das Aerosol, welches sich in einem Überdruck befindet, über eine Düse entspannt wird. Die Dispergierung findet aufgrund von Scher- und Beschleunigungskräften in der Gasströmung statt, wobei die Dispergierenergie durch die angelegte Druckdifferenz bestimmt wird. Weiterhin kann ein überkritisches Druckverhältnis eingestellt werden. Bei Überschreiten des kritischen Druckverhältnisses stellt sich hinter der Düse eine Überschallströmung ein. Bei einer überkritischen Expansion bilden sich Schockwellen aus, in denen zusätzliche Beanspruchungen auf die Agglomerate wirken, wodurch ebenfalls eine Dispergierung erreicht wird.

Dispergieren mittels Wirbelbett

In dieser Ausführungsform wird das Pulver in einem Wirbelbett vorgelegt und beim durchströmen mit Gas dispergiert. Die Dispergierung wird hierbei durch Partikel-Partikel-Stöße hervorgerufen. Die Dispergierenergie wird von der Relativgeschwindigkeit der Partikel bestimmt, wobei die Relativgeschwindigkeit der Partikel durch das durchströmende Gas erzeugt wird. Weiterhin können dem Wirbelbett größere Kugeln zugegeben werden, die als Impaktionsobjekt dienen, wobei die Dispergierung dann von Relativgeschwindigkeit Kugel-Partikel bestimmt wird. Außerdem können zusätzliche Düsen, aus denen Gas mit hohen Geschwindigkeiten ausströmt, in dem Wirbelbett angeordnet werden, wobei verschiedene Anordnungen möglich sind. Dem Fachmann ist dies als "fluidized-bed jet milling" bekannt. Berücksichtigt werden in diesem Zusammenhang auch zusätzliche feste Einbauten, die als Impaktionsfläche dienen, was als "jet impactor-assisted fluidized bed" bezeichnet wird.

Weitere, hier nicht genannte Dispergiermethoden können vom Fachmann ebenfalls herangezogen werden. Wie eben beschrieben wird also das Pulver zuerst in ein Pulver-Gas-Aerosol umgewandelt und anschließend in einen Gasstrom geleitet. Anschließend trägt der Gasstrom das fein verteilte Pulver in die Einlassseite des Wandflussfilters. Hier scheidet sich dann das Pulver in den Poren der Kanalwände ab. Dies wird im Wesentlichen dadurch bewerkstelligt, dass das Pulver bei der Beaufschlagung des Wandflussfilters im Sinne der Erfindung trocken ist. Das Pulver wird ggf. mit der Umgebungsluft vermischt auf den Filter aufgebracht. Ohne an eine bestimmte Theorie gebunden zu sein, wird angenommen, dass diese Art und Weise der Applikation des Pulvers einem Verbacken oder Agglomerieren der einzelnen Pulverbestandteile vor deren Ablagerung entgegenwirkt. Dadurch wird die ursprüngliche Teilchengröße der Pulverteilchen im Aerosol konserviert. Hierdurch ist es dann möglich, die Pulverteilchen in die Wandporen des Wandflussfilters und nicht wie im Stand der Technik beschrieben auf die Poren und auf die Wände der Einlasskanäle abzuscheiden. In den Poren liegt ein loses Haufwerk von Pulverkörnern mit wenigen Kontaktpunkte und nicht stark kompaktiert vor. Dies ist im Gegensatz zu der Trocknung von Suspensionen zu sehen. Eine Hochtemperaturbehandlung (Sinterung bei z.B. > 1000°C) ist vorliegend nicht erforderlich.

Der erfindungsgemäß hergestellte Wandflussfilter zeigt eine hervorragende Filtrationseffizienz bei nur moderatem Anstieg des Abgasgegendrucks verglichen mit einem nicht mit Pulver beaufschlagten Wandflussfilter im frischen Zustand. Bevorzugt zeigt der erfindungsgemäße Wandflussfilter eine Erhöhung der Filtrationseffizienz von mindestens 5 Absolut%, vorzugsweise mindestens 20 Absolut% und ganz besonders bevorzugt mindestens 40 Absolut% bei einer relativen Erhöhung des Abgasgegendrucks des frischen Wandflussfilters von höchstens 40%, vorzugsweise von höchsten 20% und ganz besonders bevorzugt höchstens 10% verglichen mit einem nicht mit Pulver behandelten, frischen mit katalytisch aktivem Material beschichteten Filter. Das Pulver lagert sich - wie gesagt - bevorzugt in die offenen Poren des Filters ein und bildet dort eine poröse Matrix. Die geringe Staudruckerhöhung ist vermutlich darauf zurückzuführen, dass durch die erfindungsgemäße Beaufschlagung des Filters mit einem Pulver der Querschnitt der Kanäle auf der Eingangsseite nicht verringert wird. Die poröse Pulvermatrix führt dann zu keiner übermäßigen Abgasgegendruckerhöhung.

Die so hergestellten Wandflussfilter werden zur Minderung schädlicher Abgase eines Verbrennungsmotors eingesetzt. Als Einsatzzwecke können im Prinzip alle dem Fachmann hierfür in Frage kommenden katalytischen Abgasnachbehandlungen (siehe vorne) mit einem Filter dienen, insbesondere jedoch solche bei denen der Filter in einem Abgassystem zusammen mit einem oder mehreren katalytisch aktiven Aggregaten ausgewählt aus der Gruppe bestehend aus Stickoxidspeicherkatalysator, SCR-Katalysator, Dreiwegkatalysator und Dieseloxidationskatalysator eingesetzt wird. Bevorzugt ist die Anwendung der erfindungsgemäßen Filter zur Behandlung von Abgasen eines stöchiometrisch betriebenen Verbrennungsmotors.

Entsprechend hergestellte Wandflussfilter mit einer katalytischen Beschichtung, welche im stöchiometrischen Abgas ($\lambda$ = 1 Bedingungen) Stickoxide und Kohlenwasserstoffe und Kohlenmonoxid (HC, CO und NOx) beseitigen, werden meist als katalytisch aktivierte Benzinpartikelfilter (catalyzed Gasoline Partculate Filters, cGPF) bezeichnet. Ferner interessant sind solche, die die Oxide des Stickstoffs unter fetten Abgasbedingungen und CO und HC unter mageren Bedingungen umsetzen können. Sie enthalten als katalytisch aktive Komponenten zumeist Metalle der Platingruppe, wie Pt, Pd und Rh, wobei Pd und Rh besonders bevorzugt sind. Die katalytisch aktiven Metalle sind häufig hochdispers auf hochoberflächigen Oxiden des Aluminiums, Zirkoniums und Titans oder Mischungen davon abgeschieden, welche durch weitere Übergangselemente wie z. B. Lanthan, Yttrium, Praseodym, etc. stabilisiert sein können. Ferner enthalten Dreiwegkatalysatoren Sauerstoffspeichermaterialien (z. B. Ce/Zr Mischoxide; siehe unten). Eine geeignete dreiwegekatalytische Beschichtung ist beispielsweise in EP1181970B1, EP1541220B1, WO2008113445A1, WO2008000449A2 beschrieben, auf die hiermit Bezug genommen wird.

Verschiedene katalytische Funktionen können auch miteinander kombiniert werden. So können die eben genannten Dreiwegkatalysatoren mit einer Stickoxidspeicherfunktionalität ausgestattet werden (TWNSC). Diese Katalysatoren bestehen wie eingangs ausgeführt aus Materialien, die dem Katalysator unter stöchiometrischen Abgasbedingungen die Funktion eines Dreiwegkatalysators verleihen und die unter mageren Abgasbedingungen eine Funktion für die Speicherung von Stickoxiden aufweisen. Diese gespeicherten Stickoxide werden bei kurzen fetten Betriebsphasen regeneriert, um die Speicherfähigkeit wiederherzustellen. Die Herstellung eines entsprechenden TWNSCs erfolgt vorzugsweise durch Zusammenfügen von Materialen, die für den Aufbau eines Dreiwegkatalysators und eines Stickoxidspeicherkatalysators benutzt werden. Die beiden hier beschriebenen Funktionen des TWNSCs können dabei auf einem Träger vermengt oder getrennt voneinander in unterschiedlichen Schichten oder Zonen vorliegen. Eine besonders bevorzugte Ausführungsform für einen solchen Katalysator wird beispielsweise in der WO2010097146A1 oder WO2015143191A1 beschrieben. Vorzugsweise wird während der Regeneration ein Luft-Kraftstoff-Gemisch aufrechterhalten, welches einem $\lambda$ von 0,8 bis 1 entspricht. Besonders bevorzugt liegt dieser Wert zwischen 0,85 und 0,99, ganz besonders bevorzugt zwischen 0,95 und 0,99.

Eine weitere Anwendung ist die Entfernung von Stickoxiden aus mageren Abgasgemischen mittels dem SCR-Verfahren. Zu dieser SCR-Behandlung des vorzugsweise mageren Abgases wird in dieses Ammoniak oder eine Ammoniakvorläuferverbindung eingespritzt und beides über einen erfindungsgemäß hergestellten SCR-katalytisch beschichteten Wandflussfilter geleitet. Die Temperatur über dem SCR-Filter sollte dabei zwischen 150°C und 500°C, bevorzugt zwischen 200°C und 400°C oder zwischen 180°C und 380°C betragen, damit die Reduktion möglichst vollständig von Statten gehen kann. Besonders bevorzugt ist ein Temperaturbereich von 225°C bis 350°C für die Reduktion. Weiterhin werden optimale Stickoxid-Umsätze nur erzielt, wenn ein molares Verhältnis von Stickstoffmonoxid zu Stickstoffdioxid vorliegt (NO/ $NO_2$ = 1) bzw. das Verhältnis $NO_2$/NOx = 0,5 ist (G. Tuenter et al., Ind. Eng. Chem. Prod. Res. Dev. 1986, 25, 633-636; EP1147801B1; DE2832002A1; Kasaoka et al., Nippon Kagaku Kaishi (1978), 6, 874 - 881; Avila et al., Atmospheric Environment (1993), 27A, 443 - 447). Optimale Umsätze beginnend mit 75% Konvertierung bereits bei 250°C bei gleichzeitig optimaler Selektivität zu Stickstoff werden gemäß der Stöchiometrie der Reaktionsgleichung

$$2\,NH_3 + NO + NO_2 \rightarrow 2\,N_2 + 3\,H_2O$$

nur mit einem $NO_2$/NOx-Verhältnis von um die 0,5 erzielt. Dies gilt nicht nur für SCR-Katalysatoren auf der Basis von Metall-ausgetauschten Zeolithen, sondern für alle gängigen, d.h. kommerziell erhältlichen SCR-Katalysatoren (sogenannte Fast-SCR). Ein entsprechender NO:$NO_2$-Gehalt kann durch Oxidationskatalysatoren, welche stromauf des SCR-Katalysators positioniert werden, erreicht werden.

Wandflussfilter mit einer SCR-katalytischen Funktion werden als SDPF bezeichnet. Häufig besitzen diese Katalysatoren eine Funktion zur Speicherung von Ammoniak und eine Funktion dahingehend, dass Stickoxide mit Ammoniak zusammen zu unschädlichem Stickstoff reagieren können. Ein $NH_3$-speichernder SCR-Katalysator kann nach dem Fachmann bekannten Typen ausgebildet sein. Vorliegend ist dies ein mit einem für die SCR-Reaktion katalytisch aktiven Material beschichteter Wandflussfilter, bei dem das katalytisch aktive Material - gemeinhin der "Washcoat" genannt - in den Poren des Wandflussfilters vorhanden ist. Allerdings kann dieser neben der im eigentlichen Sinn katalytisch wirksamen Komponente auch weitere Materialien wie Binder aus Übergangsmetalloxiden und hochoberflächige Trägeroxide wie Titanoxid, Aluminiumoxid, insbesondere gamma-$Al_2O_3$, Zirkon- oder Ceroxid enthalten. Als SCR-Katalysatoren eigenen sich auch solche, die aus einem der unten aufgeführten Materialien aufgebaut sind. Es können jedoch auch zonierte oder mehrschichtige Anordnungen oder auch Anordnungen aus mehreren Bauteilen hintereinander (bevorzugt zwei oder drei Bauteile) mit gleichen oder verschiedenen Materialien als SCR-Komponente verwendet werden. Auch Mischungen verschiedener Materialien auf einem Substrat sind denkbar.

Das diesbezüglich eingesetzte eigentliche katalytisch aktive Material wird bevorzugt aus der Gruppe der übergangsmetallausgetauschten Zeolithe oder zeolithähnlichen Materialien (Zeotype) ausgewählt. Derartige Verbindungen sind dem Fachmann hinreichend bekannt. Bevorzugt sind diesbezüglich Materialien aus der Gruppe bestehend aus Levynit, AEI, KFI, Chabazit, SAPO-34, ALPO-34, Zeolith β und ZSM-5. Besonders bevorzugt werden Zeolithe bzw. zeolithähnliche Materialien vom Chabazit-Typ, insbesondere CHA oder SAPO-34, sowie LEV oder AEI verwendet. Diese Materialien sind, um eine ausreichende Aktivität zu gewährleisten, vorzugsweise mit Übergangsmetallen aus der Gruppe bestehend aus Eisen, Kupfer, Mangan und Silber versehen. Ganz besonders vorteilhaft ist Kupfer in diesem Zusammenhang zu nennen. Das Metall zu Gerüstaluminium- oder beim SAPO-34 Gerüstsilizium-Verhältnis liegt in der Regel zwischen 0,3 und 0,6, vorzugsweise bei 0,4 bis 0,5. Der Fachmann weiß dabei, wie er die Zeolithe oder das zeolithähnliche Material mit den Übergangsmetallen zu versehen hat (EP0324082A1, WO1309270711A1, WO2012175409A1 sowie dort zitierte Literatur), um eine gute Aktivität gegenüber der Reduktion von Stickoxiden mit Ammoniak bereitstellen zu können. Ferner können auch Vanadiumverbindungen, Ceroxide, Cer-/Zirkonmischoxide, Titandioxid sowie wolframhaltige Verbindungen und Mischungen davon als katalytisch aktives Material verwendet werden.

Materialien, welche sich darüber hinaus für die Anwendung zur Speicherung von $NH_3$ als günstig erwiesen haben, sind dem Fachmann bekannt (US20060010857A1, WO2004076829A1). Als Speichermaterialien kommen insbesondere mikroporöse Feststoffe, z.B. so genannte Molekularsiebe zum Einsatz. Es können solche Verbindungen ausgewählt aus der Gruppe bestehend aus Zeolithen, wie z.B. Mordenite (MOR), Y-Zeolithe (FAU), ZSM-5 (MFI), Ferrierite (FER), Chabazite (CHA) und andere "small pore zeolites" wie LEV, AEI oder KFI, und β-Zeolithe (BEA) sowie zeolithähnlichen Materialien, wie z.B. Aluminiumphosphate (AIPO) und Siliziumaluminiumphosphat SAPO oder Mischungen davon eingesetzt werden (EP0324082A1). Besonders bevorzugt werden ZSM-5 (MFI), Chabazite (CHA), Ferrierite (FER), ALPO- bzw. SAPO-34 und β-Zeolithe (BEA) eingesetzt. Ganz besonders bevorzugt werden CHA, BEA und AIPO-34 bzw. SAPO-34 verwendet. Äußerst bevorzugt werden Materialien des LEV- oder CHA-Typs und hier höchst bevorzugt CHA oder LEV oder AEI verwendet. Sofern man als katalytisch aktives Material im SCR-Katalysator schon einen wie eben genannten Zeolithen oder zeolithähnliche Verbindung benutzt, kann naturgemäß die Zugabe weiteren $NH_3$-speichernden Materials vorteilhafter Weise entfallen. Insgesamt sollte die Speicherkapazität der eingesetzten Ammoniakspeicherkomponenten im Frischzustand bei einer Messtemperatur von 200°C mehr als 0.9 g $NH_3$ pro Liter Katalysatorvolumen, bevorzugt zwischen 0,9 g und 2,5 g $NH_3$ pro Liter Katalysatorvolumen und besonders bevorzugt zwischen 1,2 g und 2,0 g $NH_3$/Liter Katalysatorvolumen und ganz besonders bevorzugt zwischen 1,5 und 1,8 g $NH_3$/Liter Katalysatorvolumen betragen. Die Ammoniakspeicherfähigkeit kann mit Hilfe einer Synthesegasanlage bestimmt werden. Hierzu wird der Katalysator zunächst bei 600°C mit NO-haltigem Synthesegas konditioniert, um Ammoniak Rückstände im Bohrkern vollständig zu entfernen. Nach Abkühlen des Gases auf 200°C wird anschließend, bei einer Raumgeschwindigkeit von z. B. 30000 $h^{-1}$, so lange Ammoniak in das Synthesegas dosiert, bis der Ammoniakspeicher des Bohrkerns vollständig gefüllt ist und die gemessene Ammoniakkonzentration nach dem Bohrkern der Eingangskonzentration entspricht. Die Ammoniakspeicherfähigkeit ergibt sich aus der Differenz der insgesamt dosierten und der abstromseitig gemessenen Ammoniakmenge bezogen auf das Katalysatorvolumen. Das Synthesegas ist hierbei typischerweise aus 450 ppm $NH_3$, 5% Sauerstoff, 5% Wasser und Stickstoff zusammengesetzt.

Im Rahmen der Erfindung ist das Merkmal des Nichtvorhandenseins einer zusammenhängenden Pulverschicht auf den Wänden des Filters dahingehend zu verstehen, dass keine komplett durchgängige Schicht von Pulver auf den Eingangsoberflächen des Filters vorliegt (Fig. 2). Die Pulverbelegung des Filters wird gestoppt, wenn diese zusammenhängende Schicht sich gerade zu bilden beginnt. Mehr bevorzugt ist ebenfalls die Vermeidung einer Hügelbildung durch das Pulver. Ganz vorteilhaft ist die Abscheidung einer Pulvermenge, die die gasdurchlässigen Poren gerade bis zur Eingangsoberfläche hin auffüllt. Die Menge an Pulver, die so abgeschieden werden kann, hängt von der Art des Pulvers und dem Volumen der zur Verfügung stehenden Poren ab und kann unter den gegebenen Randbedingungen vom Fachmann in vorläufigen Versuchen bestimmt werden.

Das Merkmal, dass das Pulver im Gas dispergiert, anschließend in einen Gasstrom geleitet und ohne weitere Zufuhr eines Gases in die Einlassseite des Filters gesaugt wird, ist dahingehend zu verstehen, dass nach dem Einbringen des Pulver-Gas-Aerosols in den durch den Filter laufenden Gasstrom dieser sich in seiner Zusammensetzung nicht mehr ändert. Mithin wird kein weiterer Zustrom eines Gases, z.B. Umgebungsluft, zu dem so entstehenden Gasstrom stattfinden, so dass möglichst einheitliche Zustände des Pulver-Gas-Aerosols gegeben sind, wenn dieses in den Filter eindringt. Es ist diesem Verfahren immanent, dass der Gasstrom, in den das Pulver-Gas-Aerosol eingebracht wird, in seinen physikalischen Parametern fix - also nicht mehr veränderbar - ist, und dies schon vor der Zugabe des Pulver-Gas-Aerosols gegeben ist.

Durch den erfindungsgemäßen Filter ist es möglich, eine hohe Filtrationseffizienz insbesondere für kleinpartikuläre Ruße, wie sie aus Ottomotoren emittiert werden, zu erhalten. Der Abgasgegendruck steigt dabei nicht über Gebühr an. Die Filter - sofern katalytisch aktiv - zeigen eine ausgezeichnete katalytische Aktivität. Der Abgasgegendruck und die Filtrationseffizienz lassen sich gezielt den Kundenanforderungen anpassen. Ein entsprechend hergestellter Wandflussfilter war aus dem Stand der Technik so noch nicht bekannt.

Figuren:

Fig. 1:     Bild einer bevorzugten Apparatur zur Ausführung des erfindungsgemäßen Verfahrens

Fig. 2:     Bild einer erfindungsgemäß bestäubten Wandflussfilterwand.

Fig. 3:     Erhöhung des Abgasgegendrucks durch die Bestäubung bei einem katalytisch vorbeschichteten Filter

Fig. 4:     Erhöhung der Filtrationseffizienz durch die erfindungsgemäße Bestäubung bei einem katalytisch vorbeschichteten Filter

Fig. 5:     Schnitt durch eine bestäubten Wandflussfilterwand und die graphische Analyse der Stellen der Bestäubung

Fig. 6:     Erhöhung des Abgasgegendrucks durch die Bestäubung bei einem nicht katalytisch vorbeschichteten Filter

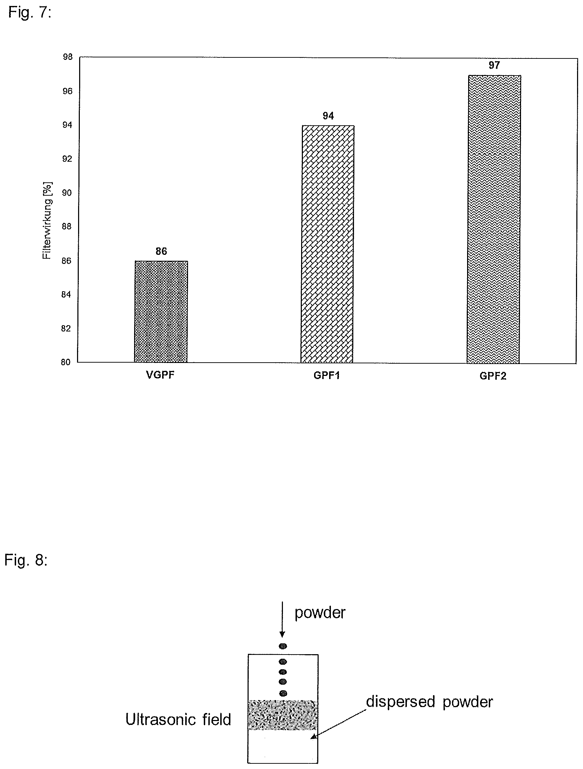

Fig. 7:     Erhöhung der Filtrationseffizienz durch die erfindungsgemäße Bestäubung bei einem nicht katalytisch vorbeschichteten Filter

Fig. 8:     Dispergieren mittels Ultraschall; Pulver im freien Fall

Fig. 9:     Dispergieren mittels Ultraschall; Pulver im freien Fall; mit Sieb

Fig. 10:    Dispergieren mittels Ultraschall; Pulver im freien Fall; mit Sieb vordispergiert

Fig. 11:    Dispergieren mittels eines Ultraschallsiebes

Fig. 12:    Dispergierenergien einer Stiftmühle bzw. Strahlmühle

Fig. 13:    Dispergieren mittels eines Gebläses

Beispiele mit katalytisch vorbeschichteten Filtern:

Zur Herstellung der in Beispielen und Vergleichsbeispielen beschriebenen Partikelfilter VGPF, sowie GPF1, GPF2 und GPF3 wurden Cordierit-Wandflussfilter mit einem Durchmesser von 11,8 cm und einer Länge von 13,5 cm in-wand beschichtet. Die Wandflussfilter hatten eine Zelligkeit von 46,5 Zellen pro Quadratzentimeter bei einer Wandstärke von 0,203 mm. Die mittlere Porengröße der Filter betrug 20 $\mu$m, wobei die Porosität der Filter bei ca. 65% lag.

Auf diese Wandflussfilter wurde zunächst eine edelmetallhaltige Beschichtungssuspension aufgebracht. Nach dem Aufbringen der Beschichtungssuspension wurden die Filter getrocknet und anschließend bei 500°C kalziniert. Die Beschichtungsmenge nach Kalzinierung entsprach 50 g/l, bezogen auf das Substratvolumen. Dies entspricht der Präparation des VGPFs.

Mithilfe einer Apparatur gemäß der Fig. 1 wurden 3 Filter mit unterschiedlichen Mengen an Aluminiumoxidpulver in den Poren beschichtet.

Beispiel 1:

GPF1: Die offenen Poren eines in-wand beschichteten Filters wurden mit 3,3 g/l, bezogen auf das Gesamtfiltervolumen, eines trockenen Aluminiumoxids erfindungsgemäß belegt. Als Pulver wurde ein Aluminiumoxid mit einem mittleren Partikeldurchmesser ($d_{50}$) von 3,5 $\mu$m verwendet. Dies entspricht einem Verhältnis der mittleren Partikelgröße des verwendeten Pulvers zur mittleren Porengröße des Filters von 0,175.

Beispiel 2:

GPF2: Die offenen Poren eines in-wand beschichteten Filters wurden mit 5,6 g/l, bezogen auf das Gesamtfiltervolumen, eines trockenen Aluminiumoxids erfindungsgemäß belegt. Als Pulver wurde ein Aluminiumoxid mit einem mittleren Partikeldurchmesser ($d_{50}$) von 3,5 $\mu$m verwendet. Dies entspricht einem Verhältnis der mittleren Partikelgröße des verwendeten Pulvers zur mittleren Porengröße des Filters von 0,175.

Beispiel 3:

GPF3: Die offenen Poren eines in-wand beschichteten Filters wurden mit 8,6 g/l, bezogen auf das Gesamtfiltervolumen, eines trockenen Aluminiumoxids erfindungsgemäß belegt. Als Pulver wurde ein Aluminiumoxid mit einem mittleren Partikeldurchmesser ($d_{50}$) von 3 $\mu$m verwendet. Dies entspricht einem Verhältnis der mittleren Partikelgröße des verwendeten Pulvers zur mittleren Porengröße des Filters von 0,15.

Die erfindungsgemäßen Partikelfilter GPF1, GPF2 und GPF3 wurden im Vergleich zu dem hergestellten VGPF untersucht. Die Partikelfilter wurden nach der Pulverbelegung auf ihren Staudruck hin vermessen, anschließend fand, wie unten beschrieben, die Filtrationsmessung am dynamischen Motorprüfstand statt. Die Staudruckerhöhung der erfindungsgemäßen Filter ist Fig. 3 gezeigt.

Die beschriebenen Filter VGPF, GPF1, GPF2 und GPF3 wurden am Motorprüfstand im Realabgas eines mit im Mittel stöchiometrischen Luft/Kraftstoff-Gemisch betriebenen Motors hinsichtlich der Frischfiltrationseffizienz untersucht. Dabei wurde ein weltweit einheitliches Testverfahren zur Bestimmung der Abgasemissionen, kurz WLTP (Worldwide harmonized Light vehicles Test Procedure), angewendet. Der verwendete Fahrzyklus war WLTC Class 3. Der jeweilige Filter wurde motornah direkt nach einem konventionellen Dreiwegekatalysator eingebaut. Dieser Dreiwegekatalysator war bei allen gemessenen Filtern derselbe. Jeder Filter wurde einem WLTP unterzogen. Um die Partikelemissionen während der Testung detektieren zu können, wurden die Partikelzähler vor dem Dreiwegekatalysator und nach dem Partikelfilter eingebaut. In Fig. 4 sind die Ergebnisse der Filtrationseffizienzmessung im WLTP zu sehen.

Die Fig. 4 zeigt die Ergebnisse der Filtrationseffizienzmessung. Je nach aufgebrachter Pulvermenge sowie der Partikelgrößenverteilung des verwendeten Pulvers ist eine Verbesserung der Filtrationseffizienz bis zu 20% bei einer maximalen Staudruckerhöhung (Fig. 3) von nur ca. 9% zu verzeichnen.

Die gemessenen Daten belegen, dass die selektive Beschichtung der offenen Poren eines bereits in-wand beschichteten Filters zu einer deutlichen Verbesserung der Filtrationseffizienz bei einem nur geringfügig erhöhten Staudruck führt.

Katalytische Charakterisierung:

Für die katalytische Charakterisierung wurden die Partikelfilter VGPF2, sowie GPF4, GPF5 verwendet. Die Wandflussfilter hatten eine Zelligkeit von 46,5 Zellen pro Quadratzentimeter bei einer Wandstärke von 0,203 mm. Die mittlere Porengröße der Filter betrug 18 $\mu$m, wobei die Porosität der Filter bei ca. 65% lag.

Auf diese Wandflussfilter wurde zunächst eine edelmetallhaltige Beschichtungssuspension aufgebracht. Nach dem Aufbringen der Beschichtungssuspension wurden die Filter getrocknet und anschließend bei 500°C kalziniert. Die Beschichtungsmenge nach Kalzinierung entsprach 75 g/l, wobei die Konzentration von Pd 1,06 g/L und Konzentration für Rh 0,21 g/L betrug. Alle Konzentrationen bezogen sich auf das Substratvolumen.

Beispiel 4:

GPF4: Die offenen Poren eines in-wand beschichteten Filters wurden mit 10 g/l, bezogen auf das Gesamtfiltervolumen, eines trockenen Aluminiumoxids belegt. Als Pulver wurde ein Aluminiumoxid mit einem mittleren Partikeldurchmesser ($d_{50}$) von 3,5 $\mu$m verwendet. Dies entspricht einem Verhältnis der mittleren Partikelgröße des verwendeten Pulvers zur mittleren Porengröße des Filters von 0,194.

Beispiel 5:

GPF5: Die offenen Poren eines in-wand beschichteten Filters wurden mit 15,8 g/l, bezogen auf das Gesamtfiltervolumen, eines trockenen Aluminiumoxids belegt. Als Pulver wurde ein Aluminiumoxid mit einem mittleren Partikeldurchmesser ($d_{50}$) von 3,5 $\mu$m verwendet. Dies entspricht einem Verhältnis der mittleren Partikelgröße des verwendeten Pulvers zur mittleren Porengröße des Filters von 0,194.

Die katalytisch aktiven Partikelfilter VGPF2, GPF4 und GPF5 wurden zunächst im frischen Zustand getestet und anschließend zusammen in einer Motorprüfstandsalterung gealtert. Diese besteht aus einer Schubabschaltungsalterung (Alterung 1) mit 900°C Abgastemperatur vor Katalysatoreingang (Maximale Betttemperatur 970°C). Die Alterungszeit betrug 19 Stunden. Nach der ersten Alterung wurden die Filter auf ihre katalytische Aktivität untersucht und anschließend einer weiteren Motorprüfstandsalterung (Alterung 2) unterzogen. Diese bestand dieses Mal aus einer Schubabschaltungsalterung mit 950°C Abgastemperatur vor Katalysatoreingang (Maximale Betttemperatur 1030°C). Anschließend wurden die Filter wiederholt getestet.

Bei der Untersuchung der katalytischen Aktivität wurde an einem Motorprüfstand das Anspringverhalten (Light-Off) der Partikelfilter bei konstanter mittlerer Luftzahl $\lambda$ und die dynamische Umsetzung bei Änderung von $\lambda$ geprüft. Des Weiteren wurden die Filter einem "lambda Sweeptest" unterzogen.

Die nachfolgenden Tabellen enthalten die Temperaturen $T_{50}$, bei denen jeweils 50% der betrachteten Komponente umgesetzt werden. Dabei wurde das Anspringverhalten bei stöchiometrischer Abgaszusammensetzung ($\lambda$ =0,999 mit $\pm$3,4% Amplitude) bestimmt. Die Standardabweichung beträgt bei diesem Test $\pm$2°C.

Tabelle 1 enthält die "Light-Off"-Daten für die frischen Filter, Tabelle 2 Daten nach Alterung 1 und Tabelle 3 Daten nach Alterung 2.

Tabelle 1

|  | $T_{50}$ HC stöch | $T_{50}$ CO stöch | $T_{50}$ NOx stöch |
|---|---|---|---|
| VGPF2 | 279 | 277 | 278 |
| GPF4 | 279 | 275 | 277 |
| GPF5 | 278 | 274 | 277 |

Tabelle 2

|  | $T_{50}$ HC stöch | $T_{50}$ CO stöch | $T_{50}$ NOx stöch |
|---|---|---|---|
| VGPF2 | 347 | 351 | 355 |
| GPF4 | 350 | 353 | 356 |
| GPF5 | 349 | 352 | 355 |

Tabelle 3

|  | $T_{50}$ HC stöch | $T_{50}$ CO stöch | $T_{50}$ NOx stöch |
|---|---|---|---|
| VGPF2 | 396 | 421 | 422 |
| GPF4 | 398 | 413 | 419 |
| GPF5 | 394 | 406 | 412 |

Das dynamische Umsatzverhalten der Partikelfilter wurde in einem Bereich für $\lambda$ von 0,99 bis 1,01 bei einer konstanten Temperatur von 510°C bestimmt. Die Amplitude von $\lambda$ betrug dabei $\pm 3,4\%$. Tabelle 3 enthält den Umsatz am Schnittpunkt der CO- und der NOx-Umsatzkurven, sowie den zugehörigen HC-Umsatz der gealterten Partikelfilter. Die Standardabweichung beträgt bei diesem Test $\pm 2\%$.

Tabelle 4 enthält die Daten für die frischen Filter, Tabelle 5 Daten nach Alterung 1 und Tabelle 6 Daten nach Alterung 2.

Tabelle 4

|  | CO/NOx Umsatz am Kreuzungspunkt | HC Umsatz am $\lambda$ des CO/NOx Kreuzungspunktes |
|---|---|---|
| VGPF2 | 99% | 99% |
| GPF4 | 99% | 99% |
| GPF5 | 99% | 99% |

Tabelle 5

|  | CO/NOx Umsatz am Kreuzungspunkt | HC Umsatz am $\lambda$ des CO/NOx Kreuzungspunktes |
|---|---|---|
| VGPF2 | 98% | 97% |
| GPF4 | 98% | 97% |
| GPF5 | 98% | 97% |

Tabelle 6

|  | CO/NOx Umsatz am Kreuzungspunkt | HC Umsatz am $\lambda$ des CO/NOx Kreuzungspunktes |
|---|---|---|
| VGPF2 | 79% | 94% |
| GPF4 | 80% | 94% |
| GPF5 | 83% | 95% |

Die erfindungsgemäßen Partikelfilter GPF4 und GPF5 zeigen im Vergleich zum VGPF2 keinerlei Nachteil in der katalytischen Aktivität im frischen und moderat gealterten Zustand. In einen stark gealterten Zustand weisen die pulverbelegten Filter GPF4 und GPF5 sogar einen Vorteil sowohl in der CO- wie auch in der NOx-Konvertierung als auch beim dynamischen CO/NOx-Umsatz auf.

Beispiele mit nicht katalytisch vorbeschichteten Filtern:

Zur Herstellung der in den Beispielen und Vergleichsbeispielen beschriebenen Partikelfilter VGPF, sowie GPF1 und GPF2 wurden Cordierit-Wandflussfilter mit einem Durchmesser von 15,8 cm und einer Länge von 14,7 cm verwendet. Die Wandflussfilter hatten eine Zelligkeit von 31 Zellen pro Quadratzentimeter bei einer Wandstärke von 0,203 mm. Die mittlere q3-Porengröße (d50) der Filter betrug 18 $\mu$m, wobei die Porosität der Filter bei ca. 50% lag.

Zur Belegung der erfindungsgemäßen Filter wurde ein Luft/Pulver-Aerosol aus einem trockenen Aluminiumoxid mit einem d10-Wert der q3-Korngröße von 0,8 $\mu$m, einem d50-Wert der q3-Korngröße von 2,9 $\mu$m und einem d90-Wert der q3-Korngröße von 6,9 $\mu$m verwendet. Dies entspricht einem Verhältnis der mittleren Partikelgröße des verwendeten Pulvers zur mittleren Porengröße des Filters von 0,16 und einem Verhältnis von d10 zu d50 von 28%.

Als Vergleichsbeispiel VGPF wurde ein unbehandelter Filter wie oben beschrieben verwendet. Die Beschichtung erfolgte mit einer Apparatur wie in Fig. 1 beschrieben.

Beispiel 1:

GPF1: Die offenen Poren eines Filters wurden mit 6 g/l, bezogen auf das Gesamtfiltervolumen, des trockenen Aluminiumoxids belegt.

Beispiel 2:

GPF2: Die offenen Poren eines Filters wurden mit 11,7 g/l, bezogen auf das Gesamtfiltervolumen, des trockenen Aluminiumoxids belegt.

Die erfindungsgemäßen Partikelfilter GPF1 und GPF2 wurden im Vergleich zu dem herkömmlichen VGPF untersucht. Die Partikelfilter wurden nach der Beschichtung auf ihren Staudruck hin vermessen, anschließend fand die Filtrationsmessung am hochdynamischen Motorprüfstand statt. Die Staudruckerhöhung der erfindungsgemäßen Filter, gemessen an einem Staudruckprüfstand (Superflow ProBench SF1020) bei Raumtemperatur bei einem Luftdurchsatz von 600 m$^3$/h, ist in Fig. 6 gezeigt.

Die beschriebenen Filter VGPF, GPF1 und GPF2 wurden am Motorprüfstand im Realabgas eines mit im Mittel stöchiometrischen Luft/Kraftstoff-Gemisch betriebenen Motors hinsichtlich der Frischfiltrationseffizienz untersucht. Dabei wurde ein weltweit einheitliches Testverfahren zur Bestimmung der Abgasemissionen, kurz WLTP (Worldwide harmonized Light vehicles Test Procedure), angewendet. Der verwendete Fahrzyklus war WLTC Class 3. Der jeweilige Filter wurden 30 cm nach einem konventionellen Dreiwegekatalysator eingebaut. Dieser Dreiwegkatalysator war bei allen gemessenen Filtern derselbe. Jeder Filter wurde einem WLTP unterzogen. Um die Partikelemissionen während der Testung detektieren zu können, wurden die Partikelzähler vor dem Dreiwegkatalysator und nach dem Partikelfilter eingebaut. In Fig. 7 sind die Ergebnisse der Filtrationseffizienzmessung im WLTP zu sehen.

Fig. 7 zeigt die Ergebnisse der Filtrationseffizienzmessung. Je nach aufgebrachter Menge des Pulvers ist eine Verbesserung der Filtrationseffizienz bis zu 10% bereits im ersten WLTP Zyklus bei einer geringen Staudruckerhöhung (Fig. 6) zu verzeichnen.

Die gemessenen Daten belegen, dass die selektive Beschichtung der offenen Poren eines konventionellen keramischen Wandflussfilters zu einer deutlichen Verbesserung der Filtrationseffizienz bei einem nur geringfügig erhöhten Staudruck führt.

**Patentansprüche**

1. Verfahren zur Herstellung eines Wandflussfilters zur Verminderung der Schadstoffe im Abgas eines Verbrennungsmotors, wobei ein trockener Filter auf dessen Eingangsoberfläche dergestalt mit einem trockenen Pulver-Gas-Aerosol, welches zumindest eine hochschmelzende Verbindung aufweist, gezielt beaufschlagt wird, dass das Pulver sich in den Poren der Filterwände niederschlägt,
**dadurch gekennzeichnet, dass**
das Pulver im Gas dispergiert, anschließend in einen Gasstrom geleitet und ohne weitere Zufuhr eines Gases in die Einlassseite des Filters gesaugt wird, und die Pulverbelegung einen zunehmenden Konzentrationsgradienten über die Länge des Filters von der Einlassseite zur Auslassseite aufweist, wobei sich der Gradient der Pulverkonzentration im Filter in axialer Richtung von der Einlassseite zur Auslassseite von negativen zu positiven Werten vergrößert, so dass wenn man den Filter entlang seiner Längsachse in drei gleich lange aufeinanderfolgende Bereiche einteilt, einlassseitig am Filter mehr Pulver abgeschieden wird als in der Mitte des Filters und auslassseitig mehr als einlassseitig, und keine komplette oder kontinuierliche Pulverschicht auf der Filterwand entsteht, und das Pulver-Gas-Aerosol mit einer Geschwindigkeit von 10 m/s bis 50 m/s durch den Filter gesaugt wird.

**2.** Verfahren nach Anspruch 1,
**dadurch gekennzeichnet, dass**
die Dispersion des Pulvers durch mindestens eine der folgenden Maßnahmen erfolgt:

- Dispergieren mittels Druckluft
- Dispergieren mittels Ultraschall
- Dispergieren mittels Sieben
- Dispergieren mittels "in-situ-Mahlen"
- Dispergieren mittels Gebläse
- Dispergieren mittels Expansion
- Dispergieren im Wirbelbett.

**3.** Verfahren nach einem der vorhergehenden Ansprüche,
**dadurch gekennzeichnet, dass**
das Pulver eine Feuchtigkeit von weniger als 20% im Zeitpunkt der Beaufschlagung des Wandflussfilters besitzt.

**4.** Verfahren nach einem der vorhergehenden Ansprüche,
**dadurch gekennzeichnet, dass**
die Menge an im Filter verbleibendem Pulver unterhalb von 50 g/l liegt

**5.** Verfahren nach einem der vorhergehenden Ansprüche,
**dadurch gekennzeichnet, dass**
das Aerosol ein Gemisch aus Luft und einem hochschmelzenden Metalloxid-, Metallsulfat-, Metallphosphat-, Metallcarbonat- oder Metallhydroxidpulver oder deren Mischungen ist.

**6.** Verfahren nach einem der vorhergehenden Ansprüche,
**dadurch gekennzeichnet, dass**
der Filter vor der Beaufschlagung mit dem Pulver-Gas-Aerosol katalytisch beschichtet wurde.

**7.** Verfahren nach einem der vorhergehenden Ansprüche,
**dadurch gekennzeichnet, dass**
das Pulver ebenfalls hinsichtlich der Verminderung der Schadstoffe im Abgas eines Verbrennungsmotors katalytisch aktiv ist.

**8.** Verfahren nach einem der vorhergehenden Ansprüche,
**dadurch gekennzeichnet, dass**
zumindest ein Teilgasstrom abstromseitig von der Saugvorrichtung entnommen wird und vor der Pulverzugabe dem Gasstrom, welcher durch den Filter gesaugt wird, zugegeben wird.

**9.** Verfahren nach einem der vorhergehenden Ansprüche,
**dadurch gekennzeichnet, dass**
durch eine beschleunigte Strömung vor dem Filter eine definierte Pulververteilung über den Filterquerschnitt eingestellt wird.

**10.** Verfahren nach einem der vorhergehenden Ansprüche 1-8,
**dadurch gekennzeichnet, dass**
das Pulver vor dem Einströmen in den Filter dergestalt verwirbelt wird, dass Ablagerungen von Pulver auf den Eingangstopfen des Wandflussfilters möglichst vermieden werden.

**Claims**

**1.** Method for producing a wall-flow filter for reducing the pollutants in the exhaust gas of an internal combustion engine, wherein a dry powder/gas aerosol having at least one refractory compound is applied to the input surface of a dry filter in a targeted manner in such a way that the powder precipitates in the pores of the filter walls,
**characterized in that**
the powder is dispersed in the gas, then is passed into a gas stream, and is sucked into the inlet side of the filter without further supply of a gas, and the powder coating has an increasing concentration gradient over the length of the filter from the inlet side to the outlet side, wherein the gradient of the powder concentration in the filter increases from negative to positive values in the axial direction from the inlet side to the outlet side, with the result that, when the filter is divided along its longitudinal axis into three successive regions of equal length, more powder is deposited on the inlet side on the filter than in the middle of the filter and on the outlet side more than on the inlet side, and no complete or continuous powder layer arises on the filter wall, and the powder/gas aerosol is sucked through the filter at a speed of 10 m/s to 50 m/s.

2. Method according to claim 1,
**characterized in that**
the powder is dispersed by at least one of the following measures:

   - Dispersion by means of compressed air
   - Dispersion by ultrasound
   - Dispersion by sieving
   - Dispersion by "in-situ milling"
   - Dispersion by blower
   - Dispersion by expansion
   - Dispersion in the fluidized bed.

3. Method according to any one of the preceding claims,
**characterized in that**
the powder has a moisture of less than 20% at the time of application to the wall-flow filter.

4. Method according to any one of the preceding claims,
**characterized in that**
the amount of powder remaining in the filter is below 50 g/l.

5. Method according to any one of the preceding claims,
**characterized in that**
the aerosol is a mixture of air and a refractory metal oxide, metal sulfate, metal phosphate, metal carbonate or metal hydroxide powder or mixtures thereof.

6. Method according to any one of the preceding claims,
**characterized in that**
the filter was catalytically coated before the powder/gas aerosol is applied.

7. Method according to any one of the preceding claims,
**characterized in that**
the powder is also catalytically active with regard to the reduction of the pollutants in the exhaust gas of an internal combustion engine.

8. Method according to any one of the preceding claims,
**characterized in that**
at least one partial gas stream is extracted downstream of the suction device and, before the powder addition, is added to the gas stream which is sucked through the filter.

9. Method according to any one of the preceding claims,
**characterized in that**
a defined powder distribution across the filter cross section is set by an accelerated flow in front of the filter.

10. Method according to any one of the preceding claims 1-8,
**characterized in that**
the powder is swirled before flowing into the filter such that deposits of powder on the input plugs of the wall-flow filter are avoided as much as possible.

**Revendications**

1. Procédé pour la fabrication d'un filtre à écoulement de paroi pour la réduction des polluants dans les gaz d'échappement d'un moteur à combustion, un filtre sec dont la surface d'entrée est exposée de manière ciblée à un aérosol sec de poudre et de gaz, lequel présente au moins un composé à haut point de fusion, étant appliqué de telle façon que la poudre se dépose dans les pores des parois du filtre,
**caractérisé en ce que**
la poudre est dispersée dans le gaz, puis guidée dans un flux de gaz et sans autre apport d'un gaz aspirée dans la face d'entrée du filtre et le revêtement en poudre présente un gradient de concentration croissant le long de la longueur du filtre de la face d'entrée vers la face de sortie, le gradient de la concentration en poudre dans le filtre augmentant dans la direction axiale de la face d'entrée vers la face de sortie de valeurs négatives à des valeurs positives, de sorte que si le filtre est divisé le long de son axe longitudinal en trois zones successives de même longueur, une plus grande quantité de poudre est déposée sur le filtre du côté de la face d'entrée qu'au centre du filtre et une plus grande quantité est déposée du côté de la face de sortie que du côté de la face d'entrée et aucune couche de poudre complète ou continue n'est créée sur la paroi du filtre et l'aérosol de poudre et de gaz est aspiré à travers le filtre à une vitesse de 10 m/s à 50 m/s.

2. Procédé selon la revendication 1,
**caractérisé en ce que**
la dispersion de la poudre est effectuée par au moins une des mesures suivantes :

   - dispersion au moyen d'air comprimé
   - dispersion au moyen d'ultrasons
   - dispersion au moyen de tamisage
   - dispersion au moyen de « broyage in-situ »
   - dispersion au moyen de ventilateur
   - dispersion au moyen d'expansion
   - dispersion dans un lit fluidisé.

3. Procédé selon l'une quelconque des revendications précédentes,
**caractérisé en ce que**
la poudre possède une humidité inférieure à 20 % au moment de l'application sur le filtre à écoulement de paroi.

4. Procédé selon l'une quelconque des revendications précédentes
**caractérisé en ce que**
la quantité de poudre restant dans le filtre est située en dessous de 50 g/l

5. Procédé selon l'une quelconque des revendications précédentes,
**caractérisé en ce que**
l'aérosol est un mélange d'air et d'une poudre d'oxyde métallique, de sulfate métallique, de phosphate métallique, de carbonate métallique ou d'hydroxyde métallique ou de leurs mélanges.

6. Procédé selon l'une quelconque des revendications précédentes,
**caractérisé en ce que**
le filtre a été revêtu catalytiquement avant l'exposition à l'aérosol de poudre et de gaz.

7. Procédé selon l'une quelconque des revendications précédentes,
**caractérisé en ce que**
la poudre est aussi catalytiquement active en ce qui concerne la réduction des polluants dans les gaz d'échappement d'un moteur à combustion.

8. Procédé selon l'une quelconque des revendications précédentes,
**caractérisé en ce que**
au moins un flux de gaz partiel est extrait en aval du dispositif d'aspiration et est ajouté au flux de gaz qui est aspiré à travers le filtre avant l'ajout de la poudre.

9. Procédé selon l'une quelconque des revendications précédentes,
**caractérisé en ce que**

une distribution de poudre définie à travers la section transversale du filtre est réglée par un écoulement accéléré en amont du filtre.

10. Procédé selon l'une quelconque des revendications 1 à 8
**caractérisé en ce que**
la poudre est tourbillonnée avant l'écoulement dans le filtre de telle façon que des dépôts de poudre sur l'obturateur d'entrée du filtre à écoulement de paroi soient évités dans la mesure du possible.

Fig. 1:

Umgebungsluft

Luftfilter

Rohr

Wirbelgenerator

Mischeinrichtung

Konstruktion zu
Erzeugung der
Kolbenströmung

Mikrowirbelerzeuger

untere
Beschichtungskammer

Warme Luft

Pulver

trockene Druckluft

zu
beschichtendes
Filtersubstrat

Kreislaufluft, aufgeheizt durch das
Abluftgebläse; reduziert die
relative Luftfeuchtigkeit

Abluftfilter

Absauggebläse

Abluft

Fig. 2:

Objektiv Z20;X150       1000μm

Fig. 3:

Fig. 4

Fig. 5:

Fig. 6:

Fig. 7:

Fig. 8:

Fig. 9:

Fig. 10:

Fig. 11:

Fig. 12:

Fig. 13

Powder silo

Powder dosing

Radial blower

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1064094 B1
- EP 2521618 B1
- WO 10015573 A2
- EP 1136462 B1
- US 6478874 B1
- US 4609563 A
- WO 9947260 A1
- JP 5378659 B
- EP 2415522 A1
- JP 2014205108 A
- WO 2005016497 A1
- JP H01151706 B
- EP 1789190 B1
- WO 2011151711 A1
- WO 2012030534 A1
- US 8388721 B2
- EP 2727640 A1
- DE 4225970 C1
- EP 2502661 A1
- EP 2502662 B1
- US 8277880 B2
- US 20110229634 A1
- US 8277880 B

- WO 2015049110 A1
- US 8495968 B2
- US 8632852 B2
- US 8534221 B2
- US 108408 A
- US 20010003351 A1
- US 6220791 B1
- WO 05022667 A2
- DE 102010015364 A1
- DE 19921409 A1
- EP 1181970 B1
- EP 1541220 B1
- WO 2008113445 A1
- WO 2008000449 A2
- WO 2010097146 A1
- WO 2015143191 A1
- EP 1147801 B1
- DE 2832002 A1
- EP 0324082 A1
- WO 1309270711 A1
- WO 2012175409 A1
- US 20060010857 A1
- WO 2004076829 A1

**In der Beschreibung aufgeführte Nicht-Patentliteratur**

- **R. HECK et al.** Catalytic Air Pollution Control - Commercial Technology. Wiley, 2002, 87
- **M. STIEß.** Mechanische Verfahrenstechnik - Partikeltechnologie. Springer, 2009, vol. 1, 35
- **M. STIEß.** Mechanische Verfahrenstechnik - Partikeltechnologie. Springer, 2009, vol. 1, 16
- **H. BENARD.** *C. R. Acad. Sci. Paris Ser. IV,* 1908, vol. 147, 839
- **H. BENARD.** *C. R. ACAD. SCI. PARIS SER. IV,* 1908, vol. 147, 970

- **T. VON KARMAN.** *Nachr. Ges. Wiss. Göttingen, Math. Phys. Kl.,* 1911, vol. 509
- **T. VON KARMAN.** *Nachr. Ges. Wiss. Göttingen, Math. Phys. Kl.,* 1912, vol. 547
- **G. TUENTER et al.** *Ind. Eng. Chem. Prod. Res. Dev.,* 1986, vol. 25, 633-636
- **KASAOKA et al.** *Nippon Kagaku Kaishi,* 1978, vol. 6, 874-881
- **AVILA et al.** *Atmospheric Environment,* 1993, vol. 27A, 443-447